(19) 

Europäisches
Patentamt

European
Patent Office

Office européen
des brevets

(11) **EP 4 787 992 A1**

(12) **EUROPEAN PATENT APPLICATION**
published in accordance with Art. 153(4) EPC

(43) Date of publication:
**05.08.2026 Bulletin 2026/32**

(21) Application number: **24878834.1**

(22) Date of filing: **29.09.2024**

(51) International Patent Classification (IPC):
**H04W 72/04** (2023.01)

(52) Cooperative Patent Classification (CPC):
**H04W 72/04; H04W 72/0446; H04W 72/0453;
H04W 72/20**

(86) International application number:
**PCT/CN2024/122257**

(87) International publication number:
**WO 2025/082189 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.10.2023 CN 202311349189**

(71) Applicant: **HUAWEI TECHNOLOGIES CO., LTD.
Shenzhen 518129 (CN)**

(72) Inventors:
• **YAN, Mao
  Shenzhen, Guangdong 518129 (CN)**
• **LIU, Fengwei
  Shenzhen, Guangdong 518129 (CN)**

(74) Representative: **Grünecker Patent- und
Rechtsanwälte
PartG mbB
Leopoldstraße 4
80802 München (DE)**

(54) **COMMUNICATION METHOD AND APPARATUS, AND STORAGE MEDIUM AND COMPUTER PROGRAM PRODUCT**

(57)    This application relates to the field of wireless communication technologies, and provides a communication method and apparatus, a storage medium, and a computer program product. It enables a plurality of first common signals to be transmitted on a plurality of frequency domain resources, thereby improving flexibility of sending the first common signals. In this application, a terminal apparatus receives a first common signal, which is one of the plurality of first common signals that are sent by a network apparatus on a plurality of time-frequency resources. The plurality of time-frequency resources correspond to N time domain resources and M frequency domain resources, where N is a positive integer and M is an integer greater than 1. By allowing time-frequency resources to span multiple frequency domain resources, flexibility of sending the first common signals is enhanced for the network apparatus. In addition, because the plurality of first common signals may occupy the plurality of frequency domain resources, a quantity of time domain resources occupied by the plurality of first common signals may be reduced, leading to lower energy consumption.

Terminal apparatus          Network apparatus

401: A plurality of first common signals

402: Receive a first common signal

403: Second common signal

FIG. 4

**Description**

CROSS-REFERENCE TO RELATED APPLICATIONS

This application claims priority to Chinese Patent Application No. 202311349189.0, filed with the China National Intellectual Property Administration on October 18, 2023 and entitled "COMMUNICATION METHOD AND APPARATUS, STORAGE MEDIUM, AND COMPUTER PROGRAM PRODUCT", which is incorporated herein by reference in its entirety.

TECHNICAL FIELD

Embodiments of this application relate to the field of wireless communication technologies, and specifically, to a communication method and apparatus, a storage medium, and a computer program product.

BACKGROUND

Compared with a 4th generation (4th generation, 4G) long term evolution (long term evolution, LTE) system, a 5th generation (5th generation, 5G) new radio (new radio, NR) system offers greater flexibility in system design, including designs in numerologies, frame structures, and time-frequency resources for channels, to better support forward compatibility and scalability.

In the 5G NR communication system, a network apparatus may send a plurality of common signals. For example, in 5G NR, a downlink synchronization channel and broadcast channel may include a plurality of synchronization signal/physical broadcast channel block (synchronization signal/physical broadcast channel block, SSB) sets. Each SSB set further includes one or more SSBs, which are essential for cell search, cell synchronization, and broadcast information or system information delivery.

In existing communication systems, common signals can be sent only using time division multiplexing, which lacks flexibility.

SUMMARY

Embodiments of this application provide a communication method and apparatus, a storage medium, and a computer program product, enabling a plurality of first common signals to be transmitted on a plurality of frequency domain resources, thereby improving flexibility of sending the first common signals.

According to a first aspect, an embodiment of this application provides a communication method. The method is applicable to a terminal apparatus. The terminal apparatus may be a terminal or a chip system in a terminal. In this application, an example in which the method is performed by the terminal apparatus is used for description.

In the method, the terminal apparatus receives a first common signal. The first common signal occupies a frequency domain resource, the first common signal is one of a plurality of first common signals sent by a network apparatus, the plurality of first common signals occupy M frequency domain resources, M is an integer greater than 1, and the frequency domain resource occupied by the first common signal is one of the M frequency domain resources. The plurality of first common signals are common signals of a same serving cell, and the plurality of first common signals are common signals within one common signal transmission period.

It can be learned that the plurality of first common signals may be sent using frequency division multiplexing alone or a combination of frequency division multiplexing and time division multiplexing. This can improve flexibility of sending the first common signals for the network apparatus. In addition, because the plurality of first common signals may occupy a plurality of frequency domain resources, a quantity of time domain resources occupied by the plurality of first common signals may be reduced, leading to lower energy consumption. For example, because the plurality of first common signals occupy a small quantity of time domain resources, the duration for the network apparatus to send the plurality of first common signals is shortened, allowing the network apparatus to prolong its off duration and reduce energy consumption. Further, time for the terminal apparatus to detect the plurality of first common signals is also reduced. This solution makes it possible for a terminal apparatus to detect the first common signals more quickly, thereby reducing energy consumption of the terminal apparatus.

In a possible implementation, the first common signal includes at least one of a synchronization signal, a broadcast channel, system information, or a paging message.

In a possible implementation, the first common signal occupies a time domain resource, the plurality of first common signals occupy N frequency domain resources, N is a positive integer, and the time domain resource occupied by the first common signal is one of the N time domain resources.

In a possible implementation, a spacing between two frequency domain resources among the M frequency domain resources is a first frequency value or a first resource block quantity. In this application, the plurality of first common signals may be sent by the network apparatus on a plurality of time-frequency resources. The plurality of time-frequency resources may include the M frequency domain resources and the N time domain resources. A spacing between two frequency domain resources among the M frequency domain resources may also be referred to as a frequency-domain spacing between two time-frequency resources among the plurality of time-frequency resources.

In a possible implementation, the first frequency value includes F×1200 kilohertz (kilohertz, kHz), F×1.44 megahertz (megahertz, MHz), F×2.88 MHz, F×4.32 MHz, F×5.76 MHz, F×8.64 MHz, F×11.52 MHz, F×17.28 MHz, F×28.28 MHz, F×34.56 MHz, F×69.12 MHz, or F×138.24 MHz, where F is a positive integer. The first frequency value matches a synchronization raster well. Therefore, the terminal apparatus searches for the first common signal based on the first frequency values. This can reduce difficulty in finding the first common signal, and improve efficiency in finding the first common signal.

In a possible implementation, the first resource block quantity is F×12, where F is a positive integer. A resource block may be an RB, an RE, or a PRB. Using a resource block quantity as a unit of a frequency-domain spacing between two time-frequency resources, with the first resource block quantity being a multiple of 12(given that a subband in a resource block consists of 12 subcarriers), this solution ensures greater compatibility with existing standards. In addition, it allows a terminal apparatus to more easily determine a frequency domain position of another time-frequency resource based on a frequency domain position of a time-frequency resource.

In a possible implementation, M is associated with a carrier frequency and/or N is associated with a carrier frequency. In this way, a value of M and/or a value of N may be set based on an actual situation of the carrier frequency, so that a candidate resource of the first common signal better matches an actually used carrier frequency.

In a possible implementation, a set of M and N values is associated with a carrier frequency. In this way, the group of values of M and N may be preset, and then a group of preset associated values is selected based on the carrier frequency. In this solution, M and N are a group of values that are preset. Therefore, the group of values may be more preferred configurations. In addition, the carrier frequency can be directly associated with one or more groups of values of M and N. This can simplify a process of selecting M and N.

In a possible implementation, M is a preset value and/or N is a preset value. In this way, the network apparatus may not need to indicate the value of M and/or the value of N to the terminal apparatus. This can reduce signaling overheads.

In this application, M is a quantity of frequency domain resources occupied by the plurality of first common signals, and N is a quantity of time domain resources occupied by the plurality of first common signals. For meanings of M and N, refer to the foregoing content. Details are not described again.

In a possible implementation, M is determined based on at least one of the following and/or N is determined based on at least one of the following: a primary synchronization signal (primary synchronization signal, PSS) sequence in the first common signal; a secondary synchronization signal (secondary synchronization signal, SSS) sequence in the first common signal; cell identity information associated with the first common signal; and a demodulation reference signal (demodulation reference signal, DMRS) sequence in a physical broadcast channel (physical broadcast channel, PBCH) of the first common signal. In this way, the network apparatus can implicitly indicate the value of M and/or the value of N. This can reduce signaling overheads.

In a possible implementation, M is determined based on at least one of the following and/or N is determined based on at least one of the following: received information indicating M; or received information indicating N. In this way, the network apparatus can indicate the value of M and/or the value of N by using signaling. This simplifies a process in which the terminal apparatus determines the value of M and/or the value of N, and simplifies operations on a terminal apparatus side.

In a possible implementation, the first common signal among the plurality of first common signals corresponds to a time-frequency index. The time-frequency index indicates an order of a time-frequency resource of the first common signal among a plurality of time-frequency resources occupied by the plurality of first common signals. The plurality of time-frequency resources are ordered in a time-first-then-frequency manner. This can be more compatible with the conventional technology.

In a possible implementation, the plurality of time-frequency resources are ordered in a frequency-first-then-time manner. This can provide more implementations, and improve solution flexibility.

In a possible implementation, the time-frequency index includes a first value and a second value. The first value indicates an order of the time domain resource of the first common signal among the N time domain resources, and the second value indicates an order of the frequency domain resource of the first common signal among the M frequency domain resources. Alternatively, it may be understood as that the first value indicates an order of a time-frequency resource of the first common signal among a plurality of time-frequency resources in the time domain, and the second value indicates an order of the time-frequency resource of the first common signal among the plurality of time-frequency resources in the frequency domain. In this way, the terminal apparatus can more quickly determine the order of the time-frequency resource of the first common signal in the time domain and frequency domain. This solution can simplify the operations on the terminal apparatus side.

In a possible implementation, the terminal apparatus receives, based on the first common signal, a second common signal or a control channel corresponding to a second common signal, where the second common signal includes system information. A first common signal may be associated with a second common signal. The terminal apparatus may receive, on a corresponding resource based on the received first common signal, the second common signal associated with the first common signal.

In a possible implementation, the frequency domain resource of the first common signal and a frequency domain resource of the second common signal satisfy one of the following: a start frequency of the frequency domain resource of the first common signal is the same as a start frequency of the frequency domain resource of the second common signal; a center frequency of the frequency domain resource of the first common signal is the same as a center frequency of the frequency domain resource of the second common signal; a frequency of the frequency domain resource of the first common signal and a frequency of the frequency domain resource of the second common signal are spaced by a second value, where the second value is a preset value; a frequency of the frequency domain resource of the first common signal and a frequency of the frequency domain resource of the second common signal are spaced by a third value, where the third value is associated with a bandwidth of the second common signal; a frequency of the frequency domain resource of the first common signal and a frequency of the frequency domain resource of the second common signal are spaced by a fourth value, where the fourth value is associated with a difference between a bandwidth of the second common signal and a bandwidth of the first common signal; or a frequency offset between the frequency domain resource of the first common signal and a frequency domain resource of another first common signal is associated with a frequency offset between the frequency domain resource of the first common signal and the frequency domain resource of the second common signal. The plurality of first common signals may be frequency division multiplexed. Therefore, based on the foregoing setting, a relationship between frequency domain resources of the first common signal and the second common signal associated with the first common signal can be specified, so that the terminal apparatus can determine a frequency domain resource position of the second common signal based on the relationship.

In a possible implementation, the time domain resource of the first common signal is the same as a time domain resource of the second common signal. In this way, the terminal apparatus can more quickly obtain the second common signal.

In a possible implementation, a time domain resource of the second common signal is associated with at least one of the time domain resource of the first common signal, a subcarrier spacing of the first common signal, a value of M, or the time-frequency index of the first common signal. In this way, because the time-frequency index is affected by a plurality of frequency domain resources, and a process of determining the time domain resource of the second common signal is further combined with a factor of a quantity of frequency domain resources, the process of determining the time domain resource of the second common signal can be more applicable to the solution of frequency division multiplexing of the plurality of time-frequency resources.

A time domain resource position of the second resource may be calculated by using a formula. For a detailed formula, refer to content in a subsequent specific embodiment. Details are not described herein.

In a possible implementation, two first common signals among the plurality of first common signals satisfy at least one of the following: the two first common signals correspond to different radio frequency channels, the two first common signals correspond to different antenna ports, or the two first common signals correspond to different spatial relations. Two first common signals among the plurality of first common signals may be sent by the network apparatus through two different radio frequency channels (or on different antenna ports, or based on two different spatial relations). In this way, a common signal can be sent through a dedicated radio frequency channel (or on an antenna port or based on a spatial relation), so that a selected radio frequency channel (or antenna port or spatial relation) can be more matched with sending of the common signal. In this embodiment of this application, a spatial relation corresponding to two first common signals may alternatively be replaced with a beam corresponding to the two first common signals.

In a possible implementation, the plurality of first common signals satisfy at least one of the following: the plurality of first common signals correspond to a first radio frequency channel, a first antenna port, or a first spatial relation. The plurality of first common signals may be sent by the network apparatus through the first radio frequency channel (or through the first antenna port). In another possible implementation, the second common signal is also sent through a first radio frequency channel (or on a first antenna port, or based on a first spatial relation) of the network apparatus. In a possible implementation, a signal sent through the first radio frequency channel (or the first antenna port) is a common signal. A data signal may be sent through a radio frequency channel (or an antenna port) other than the first radio frequency channel (or the first antenna port). It may also be understood that a data signal and a common signal are sent through different radio frequency channels (or on different antenna ports). In another possible implementation, that a signal whose spatial relation is the first spatial relation belongs to a common signal may also be understood as that spatial relations associated with a data signal and a common signal are different. This can improve transmit power of the common signal.

According to a second aspect, an embodiment of this application provides a communication method. The method is applicable to a network apparatus. The network apparatus may be a network device or a chip system in a network device. In this application, an example in which the method is performed by the network apparatus is used for description.

The network apparatus sends a plurality of first common signals. The plurality of first common signals occupy M frequency domain resources, M is an integer greater than 1, and a first common signal among the plurality of first common signals occupies one of the M frequency domain resources. The plurality of first common signals are common signals of a same serving cell, and the plurality of first common signals are common signals within one common signal transmission period.

The plurality of first common signals may be sent using frequency division multiplexing alone or a combination of of frequency division multiplexing and time division multiplexing. This can improve flexibility of sending the first common signals for the network apparatus. In addition, because the plurality of first common signals may occupy a plurality of frequency domain resources, a quantity of time domain resources occupied by the plurality of first common signals may be reduced. This can save time domain resources and can reduce energy consumption. For example, because the plurality of first common signals occupy a small quantity of time domain resources, the duration for the network apparatus to send the plurality of first common signals is shortened, allowing the network apparatus to prolong its off duration and reduce energy consumption. Further, time for a terminal apparatus to detect the plurality of first common signals is also reduced. This solution makes it possible for a terminal apparatus to detect the first common signals more quickly, thereby reducing energy consumption of the terminal apparatus.

For related content of the first common signal and a resource occupied by the first common signal, refer to the descriptions in the first aspect and the possible implementations of the first aspect. Details are not described again.

In a possible implementation, the network apparatus sends a second common signal or a control channel corresponding to a second common signal, where the second common signal includes system information.

For related content of the first common signal and the second common signal, refer to the descriptions in the first aspect and the possible implementations of the first aspect. Details are not described again.

According to a third aspect, a communication apparatus is provided. The communication apparatus may be the foregoing terminal apparatus or the foregoing network apparatus. The communication apparatus may include a communication unit and a processing unit, to perform any one of the first aspect and the second aspect or any possible implementation of the first aspect and the second aspect. The communication unit is configured to perform functions related to sending and receiving. Optionally, the communication unit includes a receiving unit and a sending unit. In a design, the communication apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the communication apparatus further includes modules that can be configured to perform any one of the first aspect and the second aspect or any possible implementation of the first aspect and the second aspect.

According to a fourth aspect, a communication apparatus is provided. The communication apparatus may be the foregoing terminal apparatus or the foregoing network apparatus. The communication apparatus may include a processor and a storage, to perform any one of the first aspect and the second aspect or any possible implementation of the first aspect and the second aspect. Optionally, the communication apparatus further includes a transceiver. The storage is configured to store a computer program or instructions. The processor is configured to invoke the computer program or the instructions from the storage and run the computer program or the instructions. When the processor executes the computer program or the instructions in the storage, the communication apparatus is enabled to perform any one of the first aspect and the second aspect or any one of the possible implementations of the first aspect and the second aspect.

Optionally, there are one or more processors, and there are one or more storages.

Optionally, the storage may be integrated with the processor, or the storage and the processor are disposed separately.

Optionally, the transceiver may include a transmitter machine (transmitter) and a receiver machine (receiver).

According to a fifth aspect, a communication apparatus is provided. The communication apparatus may be the foregoing terminal apparatus or the foregoing network apparatus. The communication apparatus may include a processor, to perform any one of the first aspect and the second aspect or any possible implementation of the first aspect and the second aspect. The processor is coupled to a storage. Optionally, the communication apparatus further includes the storage. Optionally, the communication apparatus further includes a communication interface, and the processor is coupled to the communication interface.

In an implementation, when the communication apparatus is the terminal apparatus or the network apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a system is provided. The system includes the foregoing terminal apparatus.

In a possible implementation, the system may further include one or more network apparatuses.

According to a seventh aspect, a computer program product is provided. The computer program product includes a computer program (which may also be referred to as code or instructions). When the computer program is run, a computer is enabled to perform any one of the first aspect and the second aspect or any possible implementation of the first aspect and the second aspect.

According to an eighth aspect, a computer-readable storage medium is provided. The computer-readable storage medium stores a computer program (which may also be referred to as code or instructions). When the computer program is run on a computer, the computer is enabled to perform any one of the first aspect and the second aspect or any possible implementation of the first aspect and the second aspect.

According to a ninth aspect, a chip system is provided. The chip system may include a processor. The processor is coupled to a storage, and may be configured to: perform any one of the first aspect and the second aspect or any possible implementation of the first aspect and the second aspect. Optionally, the chip system further includes the storage. The storage is configured to store a computer program (which may also be referred to as code or instructions). The processor is configured to: invoke the computer program from the storage and run the computer program, so that a device on which the chip system is installed performs any one of the first aspect and the second aspect, or performs any one of the possible implementations of the first aspect and the second aspect.

According to a tenth aspect, a processing apparatus is provided, and includes an interface circuit and a processing circuit. The interface circuit may include an input circuit and an output circuit. The processing circuit is configured to: receive a signal through the input circuit, and transmit a signal through the output circuit, so that any one of the first aspect and the second aspect or any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, any type of logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, the processing apparatus is a terminal apparatus, a network apparatus, or a positioning management apparatus. The interface circuit may be a radio frequency processing chip in the terminal apparatus, the network apparatus, or the positioning management apparatus, and the processing circuit may be a baseband processing chip in the terminal apparatus, the network apparatus, or the positioning management apparatus.

In another implementation, the communication apparatus may be a part of devices in a terminal apparatus, a network apparatus, or a positioning management apparatus, for example, an integrated circuit product like a system chip or a communication chip. The interface circuit may be an input/output interface, an interface circuit, an output circuit, an input circuit, a pin, a related circuit, or the like on the chip or a chip system. The processing circuit may be a logic circuit on the chip.

BRIEF DESCRIPTION OF DRAWINGS

FIG. 1 is a diagram of an architecture of a communication system to which an embodiment of this application is applied;

FIG. 2 is a diagram of possible SSB transmission periods according to an embodiment of this application;

FIG. 3 is a diagram of possible resource positions of SSBs in a 5G NR system according to an embodiment of this application;

FIG. 4 is a possible schematic flowchart of a communication method according to an embodiment of this application;

FIG. 5 is a diagram of possible positions of time-frequency resources of first common signals according to an embodiment of this application;

FIG. 6 shows a possible example of time-frequency indexes corresponding to first common signals according to an embodiment of this application;

FIG. 7 shows another possible example of time-frequency indexes corresponding to first common signals according to an embodiment of this application;

FIG. 8 shows another possible example of time-frequency indexes corresponding to first common signals according to an embodiment of this application;

FIG. 9 is a diagram of a relationship between resource positions of first common signals and second common signals according to an embodiment of this application;

FIG. 10 is a diagram of another relationship between resource positions of first common signals and second common signals according to an embodiment of this application;

FIG. 11 is a diagram of a possible structure of a communication apparatus according to an embodiment of this application;

FIG. 12 is a diagram of a possible structure of another communication apparatus according to an embodiment of this application;

FIG. 13 is a diagram of a possible structure of another communication apparatus according to an embodiment of this application; and

FIG. 14 is a diagram of a possible structure of another communication apparatus according to an embodiment of this application.

DESCRIPTION OF EMBODIMENTS

The following describes nouns or terms in embodiments of this application.

1. Time-frequency resource

A time-frequency resource in embodiments of this application may be replaced with a resource. The time-frequency resource may include a time domain resource and/or a frequency domain resource.

1.1 Time domain resource

The time domain resource includes at least one of a symbol (symbol), a slot (slot), a mini-slot (mini-slot), a partial slot (partial slot), a sub-frame (sub-frame), a frame (frame), or a sensing slot (sensing slot).

In embodiments of this application, a time domain symbol may be an orthogonal frequency division multiplexing (orthogonal frequency division multiplexing, OFDM) symbol or a discrete Fourier transform-spread-OFDM (Discrete Fourier Transform-spread-OFDM, DFT-s-OFDM) symbol.

In embodiments of this application, a time domain resource may be understood as a time domain resource occupied by a single first common signal. In embodiments of this application, an example in which a network apparatus sends a plurality of first common signals on N time domain resources is used for description, where N is a positive integer. A first common signal occupies one of the N time domain resources.

A single time domain resource may include at least one of the following: at least one symbol (symbol), at least one slot (slot), at least one mini-slot (mini-slot), at least one partial slot (partial slot), at least one sub-frame (sub-frame), at least one frame (frame), or at least one sensing slot (sensing slot).

1.2 Frequency domain resource

The frequency domain resource includes a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace), and the like.

In embodiments of this application, a frequency domain resource may be understood as a frequency domain resource occupied by a single first common signal. In embodiments of this application, an example in which a network apparatus sends a plurality of first common signals on M frequency domain resources is used for description, where M may be a positive integer greater than 1. In some possible implementations, a value of M may also be set to 1. For specific content, refer to descriptions in subsequent implementations. A first common signal occupies one of the M frequency domain resources.

A single frequency domain resource may include at least one of the following: at least one RE, at least one RB, at least one subchannel (subchannel), at least one resource pool (resource pool), at least one bandwidth (bandwidth), at least one BWP, at least one carrier (carrier), at least one channel (channel), or at least one interlace (interlace).

2. SSB

A downlink synchronization channel and broadcast channel may include a plurality of SSB sets. Each SSB set further includes one or more SSBs. An SSB includes at least one of a PSS, an SSS, and a PBCH. When the SSB includes the PBCH, a physical resource block (physical resource block, PRB) in which each PBCH is located further includes a PBCH DMRS.

The SSB may also be a signal used for initial access in a NR system. The SSB may be used for cell search, cell synchronization, and delivery of broadcast information or system information, and it may be further used for radio resource management (radio resource management, RRM) measurement and/or channel quality measurement.

With respect to time domain periodicity, NR supports a plurality of SSB transmission periods. During an initial access phase, a terminal assumes that the SSB transmission periods is 20 ms, that is, a duration of two radio frames. To improve coverage, the NR system uses beamforming for a common channel, achieving omnidirectional coverage by sending a plurality of SSBs through beam sweeping.

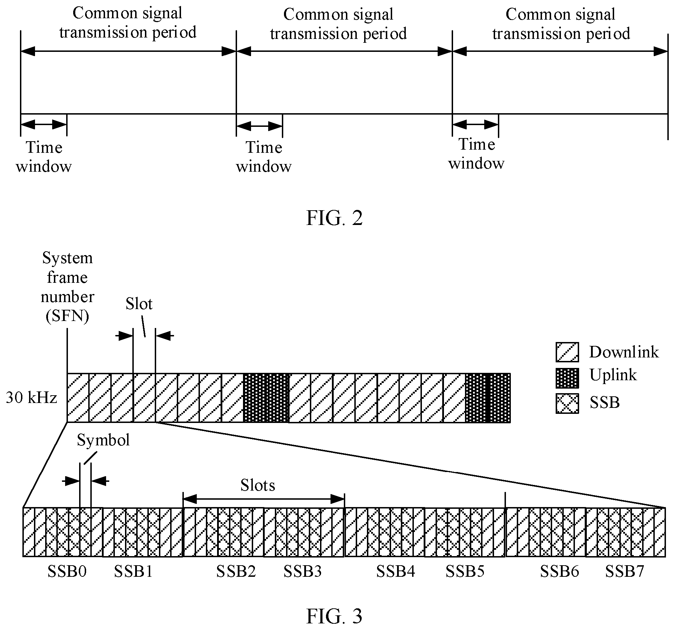

FIG. 2 is a diagram of an example of possible SSB transmission periods according to an embodiment of this application. As shown in FIG. 2, sending of common signals is periodic, and there is a time window in duration of each common signal transmission period. For example, a common signal transmission period is 20 ms, and there is one time window in each 20 ms. For example, the time window is 5 ms or at least one slot, and all common signals within the common signal transmission period are sent in the time window.

3. Antenna port

An antenna port is a logical concept, and there is no direct correspondence between an antenna port and a physical antenna. The antenna port is usually associated with a signal (for example, a reference signal), and may be understood as a transceiver interface on a channel through which the signal (for example, the reference signal) passes. For a low frequency, an antenna port may correspond to one or more antenna array elements that jointly send a reference signal. A receiver may treat the array elements as a whole, without needing to distinguish between them. For a high frequency system, an antenna port may correspond to a spatial relation (which may also be referred to as a beam). Similarly, the receiver only needs to treat the spatial relation as an interface, without needing to distinguish between array elements.

4. Spatial relation (spatial relation)

Spatial relations of two signals (for example, spatial relations of two first common signals subsequently used) in embodiments of this application may be relations of the two signals during spatial propagation of the two signals. The spatial relation in embodiments of this application may alternatively be replaced with another name, for example, a beam, a beam direction, a transmission direction, a transmit beam direction, a reception direction, or a receive beam direction.

In embodiments of this application, two signals are considered to have the same spatial relation if their propagation directions are consistent or similar. In embodiments of this application, a spatial relation of one signal may be associated with another signal (for example, a reference signal). In embodiments of this application, two signals are considered to have the same spatial relation if reference signals associated with the spatial relations of the two signals are the same. For example, a spatial relation of a first common signal #1 is associated with a reference signal #1, and a spatial relation of a first common signal #2 is associated with the reference signal #1. In this case, it may be considered that reference signals associated with spatial relations of the first common signal #1 and the first common signal #2 are the same, or it may be considered that the first common signal #1 and the first common signal #2 have the same spatial relation.

The association of spatial relations of the two signals in embodiments of this application may also refer to an association relationship between a transmit beam or a receive beam of one signal and a transmit beam or a receive beam of another signal in space, for example, if beam directions of the transmit beam or the receive beam of one signal are consistent with or similar to the transmit beam or the receive beam of the another signal.

The spatial relation in embodiments of this application may alternatively be replaced with another name like a beam. A beam may be understood as a communication resource, and it may be wide, narrow, or of another type. A technology for forming a beam may be beamforming technology or other technical means. The beamforming technology may be specifically digital beamforming technology, analog beamforming technology, or hybrid digital/analog beamforming technology. Different beams may be considered as different resources. Same information or different information may be sent through different beams. Optionally, a plurality of beams having the same or similar communication characteristics may be considered as one beam. A single beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna. It may be understood that one or more antenna ports forming one beam can also be considered as an antenna port set. In a protocol, the beam may also be embodied as a spatial filter (spatial filter).

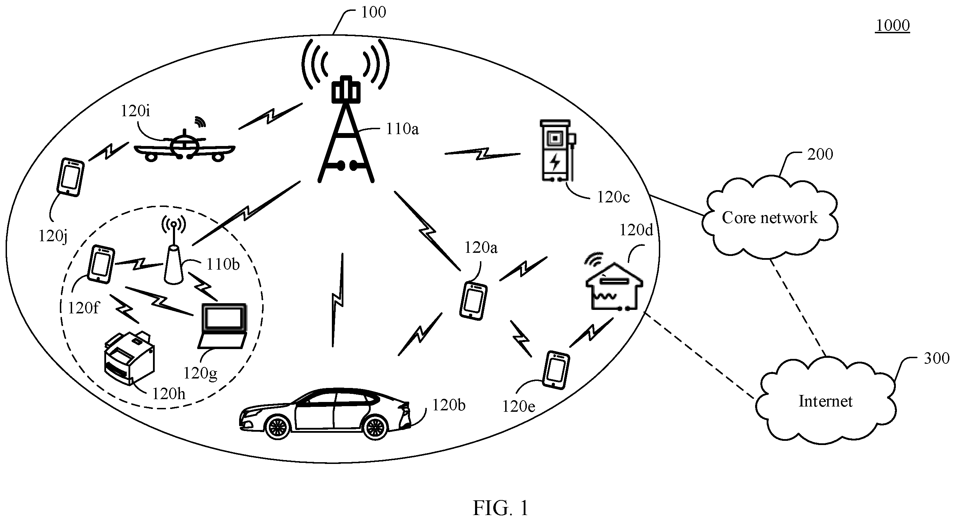

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). A terminal is connected to a radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for a connection between terminals and a connection between radio access network devices. FIG. 1 is only a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that implements some functions of the base station, for example, may be a central unit (central unit, CU), or may be a distributed unit (distributed unit, DU). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an unmanned aerial vehicle, a helicopter, an airplane, a ship, a robot, a mechanical arm, a smart home device, or the like. A specific technology and a specific device form that are used by the terminal are not limited in embodiments of this application.

The base station and the terminal may be fixed or movable. The base station and the terminal may be deployed on land, including an indoor or outdoor scenario, and a handheld or a vehicle-mounted scenario; or may be deployed on water; or may be deployed on an airplane, a balloon, or a satellite in the air. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, each of 110a and 110b in FIG. 1 may be referred to as a communication apparatus having a function of a base station, and each of 120a to 120j in FIG. 1 may be referred to as a communication apparatus having a function of a terminal.

Communication between the base station and the terminal, between base stations, or between terminals may be performed on a licensed spectrum, or may be performed on an unlicensed spectrum, or may be performed on both a licensed spectrum and an unlicensed spectrum. Communication may be performed on a spectrum below 6 gigahertz (gigahertz, GHz), or may be performed on a spectrum above 6 GHz, or may be performed on both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In a 5G NR communication system, for example, in a hybrid beamforming (hybrid beamforming, HBF) architecture, a data channel usually uses a high-gain narrow beam to implement better coverage and spectral efficiency. A cell common channel uses a low-gain wide beam to implement wide coverage at low overheads. A common signal carried on the cell common channel can be sent only using time division multiplexing (time division multiplexing, TDM). This sending manner may also be referred to as a sending manner of beam sweeping. The following uses an example in which a common signal is an SSB to describe a sending manner of a common signal.

FIG. 3 is a diagram of an example of possible resource positions of SSBs in a 5G NR system according to an embodiment of this application. Refer to FIG. 3, a network apparatus may periodically send SSBs. In one SSB transmission period, the network apparatus may send a set of SSB beams in a manner of TDM. The set of SSB beams is represented by SSB indexes. For example, for the NR system deployed in a frequency band of 3 GHz to 6 GHz, the set of SSBs includes eight SSB beams of SSB indexes #0, #1, ..., and #7.

Time domain resources of the eight SSBs are sent in the manner of TDM, that is, the SSBs are sent on one frequency (frequency) of one carrier or bandwidth part, and the SSBs are not sent on another frequency at the same time. For time positions, the set of SSBs may be located in a first half frame of a radio frame, and a time domain position of each SSB is fixed. Refer to FIG. 3. For example, a 30 kHz SCS is used. The eight SSBs are located in first four slots in a first half frame, and specific symbol positions are also shown in FIG. 3. A frequency domain position of each SSB of the eight SSBs is flexible, and only needs to be on a predefined frequency raster.

It can be learned from the foregoing example that the sending manner of the current common signal is not flexible enough, and the common signal can be sent only in the manner of time division multiplexing. As a result, the common signal occupies a large quantity of time domain resources, and this is not conducive to energy saving. For example, because the common signal occupies the large quantity of time domain resources, long duration is required for the network apparatus to send the common signal. Consequently, off duration of the network apparatus is limited (for example, the network apparatus is in a low-load system), and energy efficiency of the network apparatus is low. For another example, because the common signal occupies the large quantity of time domain resources, a terminal apparatus also needs to keep detecting the common signal in a long delay. It can be learned that this manner is not conducive to energy saving of the terminal apparatus. In addition, the common signal is sent in the manner of time division multiplexing. Consequently, a medium- and low-gain wide beam may be used for the common signal in much time, and system performance is reduced.

For the foregoing problem, embodiments of this application provide a possible implementation. In this implementation, a plurality of first common signals may be sent on a plurality of time-frequency resources. The plurality of time-frequency resources may correspond to a plurality of frequency domain resources. In other words, the plurality of first common signals may alternatively be sent using frequency division. In this way, a sending manner of the first common signal can be more flexible. In addition, when the plurality of first common signals are sent in the manner of frequency division, a quantity of time domain resources occupied by the plurality of first common signals may be reduced. This can save time domain resources and can reduce energy consumption. Further, because the quantity of time domain resources occupied by the plurality of first common signals is reduced, the plurality of first common signals can use a high-gain narrow beam, to implement better coverage and spectral efficiency, thereby improving system performance.

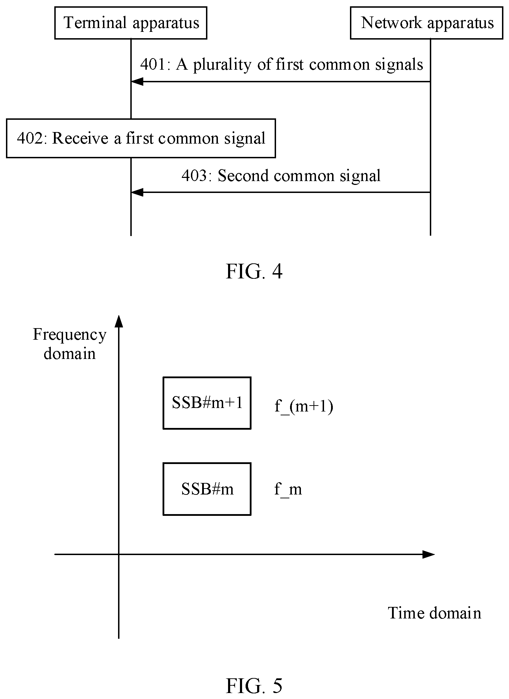

Based on the content shown in FIG. 1 and the foregoing other content, FIG. 4 is a possible schematic flowchart of an example of a communication method according to an embodiment of this application. For ease of understanding, FIG. 4 is described from a perspective of interaction between a terminal apparatus and a network apparatus. The terminal apparatus in FIG. 4 may be the terminal device in FIG. 1 or a chip system in the terminal device. The network apparatus in FIG. 4 may be the network device (for example, the radio access network device or the wireless backhaul device) in FIG. 1 or a chip system in the network device.

As shown in FIG. 4, the method includes step 401 and step 402. The method may not include step 403, or may include step 403. The following describes each step with reference to the accompanying drawings.

Step 401: The network apparatus sends a plurality of first common signals.

Step 402: The terminal apparatus receives a first common signal.

The first common signal received by the terminal apparatus is one of the plurality of first common signals sent by the network apparatus.

In embodiments of this application, there are a plurality of sending manners of two first common signals among the plurality of first common signals. For example, the two first common signals may be sent using time division multiplexing, frequency division multiplexing, or a combination of both.

The network apparatus may flexibly select a sending manner for sending. In a possible implementation, the network apparatus may select the sending manner based on load. For example, when determining that load in a system is heavy, the network apparatus sends the plurality of first common signals in the manner of time division, so that the terminal apparatus can quickly access a network. When load in the system is light, the network apparatus may send the plurality of first common signals in the manner of frequency division, so that energy consumption of the network apparatus can be reduced. In embodiments of this application, an example in which the two first common signals among the plurality of first common signals are sent in the manner of frequency division multiplexing, or the two first common signals are sent in the manner of time division multiplexing and frequency division multiplexing is used for description.

The first common signal includes at least one of a synchronization signal, a broadcast channel, system information, or a paging message. In a possible implementation, the first common signal is an SSB.

In embodiments of this application, the plurality of first common signals sent by the network apparatus are common signals of a same serving cell. In embodiments of the present invention, a carrier and a serving cell have a same definition, and may be replaced with a same term in the following. In embodiments of the present invention, sending of the first common signal may be understood as being for a single carrier, a single serving cell, or a single bandwidth part (bandwidth part, BWP). A BWP is a subset of a serving cell. For example, one serving cell may include a maximum of S BWPs, where S may be an integer, for example, S=4. A terminal apparatus can transmit a signal on only an activated BWP at a moment. For example, one terminal apparatus activates one BWP at a moment. In embodiments of this application, a transmission manner of the plurality of first common signals is flexible. For example, time division multiplexing or frequency division multiplexing may be used, or time division multiplexing and frequency division multiplexing may be used. When two first common signals among the plurality of first common signals are frequency division multiplexed, in a possible example, the network apparatus sends the two first common signals (for example, two SSBs) on at least two frequencies of one carrier or one BWP at same time.

In embodiments of this application, the network apparatus may periodically send the first common signals. In embodiments of this application, one period is used as an example for description. The plurality of first common signals in embodiments of this application are common signals within one common signal transmission period.

The plurality of first common signals are sent by the network apparatus on a plurality of time-frequency resources. One time-frequency resource includes a time-frequency resource used to send one first common signal, and one time-frequency resource may also be understood as a time-frequency resource occupied by one first common signal. There is an offset between frequencies of any two time-frequency resources among the plurality of time-frequency resources in the frequency domain. The two time-frequency resources may be two adjacent or non-adjacent time-frequency resources among the plurality of time-frequency resources. The frequency offset may be represented by a frequency value, or may be represented by a resource block quantity. The following uses Example 1 and Example 2 for description.

Example 1: A frequency-domain spacing between two time-frequency resources among the plurality of time-frequency resources used to transmit the plurality of first common signals is a first frequency value.

In a possible implementation, the plurality of first common signals occupy M frequency domain resources, M is an integer greater than 1, and a first common signal among the plurality of first common signals occupies one of the M frequency domain resources. A spacing between two frequency domain resources (either adjacent or non-adjacent) among the M frequency domain resources is the first frequency value.

In a possible implementation, the first frequency value includes one of $F \times 1200$ kHz, $F \times 1.44$ MHz, $F \times 2.88$ MHz, $F \times 4.32$ MHz, $F \times 5.76$ MHz, $F \times 8.64$ MHz, $F \times 11.52$ MHz, $F \times 17.28$ MHz, $F \times 28.28$ MHz, $F \times 34.56$ MHz, $F \times 69.12$ MHz, or $F \times 138.24$ MHz, where $\times$ represents multiplication, and F is a positive integer. The first frequency value matches a synchronization raster well. Therefore, the terminal apparatus searches for the first common signal based on the first frequency values. This can reduce difficulty in finding the first common signal, and improve efficiency in finding the first common signal.

FIG. 5 is a diagram of an example of possible positions of time-frequency resources of first common signals according to an embodiment of this application. FIG. 5 shows an example of two first common signals that are adjacent (or non-adjacent) in the frequency domain at the same time. A frequency (which may be a center frequency or a start frequency) corresponding to an $m^{th}$ first common signal is $f\_m$, and a frequency (which may be a center frequency or a start frequency) corresponding to an $(m+1)^{th}$ first common signal is $f\_(m+1)$. An offset $(f\_(m+1)-f\_m)$ between frequencies of time-frequency resources corresponding to the two first common signals is the first frequency value.

In another possible implementation, the first frequency value is related to a bandwidth of system information (or a bandwidth of a control channel resource CORESET).

For example, the first frequency value is the same as the bandwidth of the system information (or the bandwidth of the control channel resource CORESET), or the first frequency value is half of the bandwidth of the system information (or the bandwidth of the control channel resource CORESET), or the first frequency value is twice the bandwidth of the system information (or the bandwidth of the control channel resource CORESET).

In another possible implementation, a value of the first frequency value is related to a carrier frequency range (or a frequency band).

For example, different carrier frequency ranges (or frequency bands) may correspond to different first frequency values. Alternatively, it may be understood that different carrier frequency ranges (or frequency bands) may correspond to different values of the first frequency value. In this way, the value of the first frequency value can be set based on an actual situation of the carrier frequency range (or frequency band), so that the frequency-domain spacing between the two time-frequency resources better matches the actually used carrier frequency range (or frequency band).

For example, Table 1 shows a possible example of M and N corresponding to a carrier frequency range. As shown in Table 1, when a carrier frequency falls within a frequency range 0 to f0, candidate values of the first frequency value may be {F00, F01, ...}, and the first frequency value may be one of the candidate values. Meanings of other rows are similar, and details are not described.

Table 1 A possible example of M and N corresponding to a carrier frequency range

| Carrier frequency range (in a unit of MHz or gigahertz (gigahertz, GHz)) | Candidate values of the first frequency value |
|---|---|
| 0 to f0 | {F00, F01, ...} |
| f0 to f1 | {F10, F11, ...} |
| f1 to f2 | {F20, F21, ...} |
| ... | ... |

In a possible implementation, the first frequency value may have a candidate value set, and the first frequency value may be selected from the candidate value set. In a possible implementation, a value, in the candidate value set, of the first frequency value may be related to a bandwidth of system information, a frequency band, or a carrier frequency range. For related content, refer to the foregoing descriptions. Details are not described again.

Example 2: A frequency-domain spacing between two time-frequency resources among the plurality of time-frequency resources used to transmit the plurality of first common signals is a first resource block quantity.

In a possible implementation, a spacing between two frequency domain resources (either adjacent or non-adjacent) among the M frequency domain resources is the first resource block quantity.

A bandwidth and/or a time domain resource (for example, a slot or an OFDM symbol) of a resource block (or a subcarrier corresponding to a resource block) may be determined based on a subcarrier spacing of a common signal. In embodiments of this application, one resource block may include a time domain resource and a frequency domain resource, a quantity of time domain resources included in the resource block may be preset, and a quantity of frequency domain resources included in the resource block may also be preset. For example, a resource block may be an RB, an RE, or a PRB.

In a possible implementation, the first resource block quantity is $F \times 12$, where F is a positive integer. Using a resource block quantity as a unit of a frequency-domain spacing between two time-frequency resources, with the first resource block quantity being a multiple of 12 (given that a subband in a resource block consists of 12 subcarriers), this solution ensures greater compatibility existing standards. In addition, it allows a terminal apparatus to more easily determine a frequency domain position of another time-frequency resource based on a frequency domain position of a time-frequency resource.

The plurality of first common signals are sent by the network apparatus on a plurality of time-frequency resources. The plurality of time-frequency resources correspond to N time domain resources, and the plurality of time-frequency resources correspond to M frequency domain resources. It may also be understood that time domain resources occupied by all resources in the plurality of time-frequency resources are the N time domain resources, and frequency domain resources occupied by all the resources in the plurality of time-frequency resources are the M frequency domain resources, where N is a positive integer, and M is a positive integer. M may be 1, or M may be an integer greater than 1. When M is 1, it may also be understood that the plurality of first common signals are sent using time division multiplexing. When M is greater than 1, two first common signals among the plurality of first common signals are sent using frequency division multiplexing alone or a combination of time division multiplexing and frequency division multiplexing. The network apparatus may flexibly select a sending manner of the plurality of first common signals.

In embodiments of this application, in addition to implementations in the foregoing Example 1 and Example 2, there are other implementations for sending the first common signals for the network apparatus.

For example, in another possible implementation, if the network apparatus needs to separately send a plurality of first common signals at two candidate frequency domain positions, for one time domain position (or for one time domain resource, or at a same time position), if the network apparatus sends the first common signals at one candidate frequency domain position, the network apparatus needs to send the first common signals at the other candidate frequency domain position (at the same time position). This implementation can improve the sending efficiency of the common signal, simplify signaling indicating a sending location of the common signal, and reduce resource overhead.

In another possible implementation, if the network apparatus needs to separately send a plurality of first common signals at two candidate time domain positions, for one frequency domain position (or for one frequency domain resource, or at a same frequency domain position), if the network apparatus sends the first common signals at one candidate time domain position, the network apparatus needs to send the first common signals at the other candidate time domain position (at the same time position).

In embodiments of this application, the first common signal among the plurality of first common signals corresponds to a time-frequency index. The time-frequency index in embodiments of this application may also be replaced with an index, an identifier, or the like. The time-frequency index corresponding to the first common signal may indicate a time-frequency resource of the first common signal. The time-frequency index corresponding to the first common signal may also be understood as an index corresponding to the time-frequency resource of the first common signal.

There are a plurality of possible implementations of the time-frequency index corresponding to the first common signal. The following uses Implementation A1, Implementation A2, and Implementation A3 as examples to describe several possible implementations.

In Implementation A1, the time-frequency index corresponding to the first common signal indicates an order of the time-frequency resource of the first common signal among the plurality of time-frequency resources, and the plurality of time-frequency resources are ordered in a time-first-then-frequency manner.

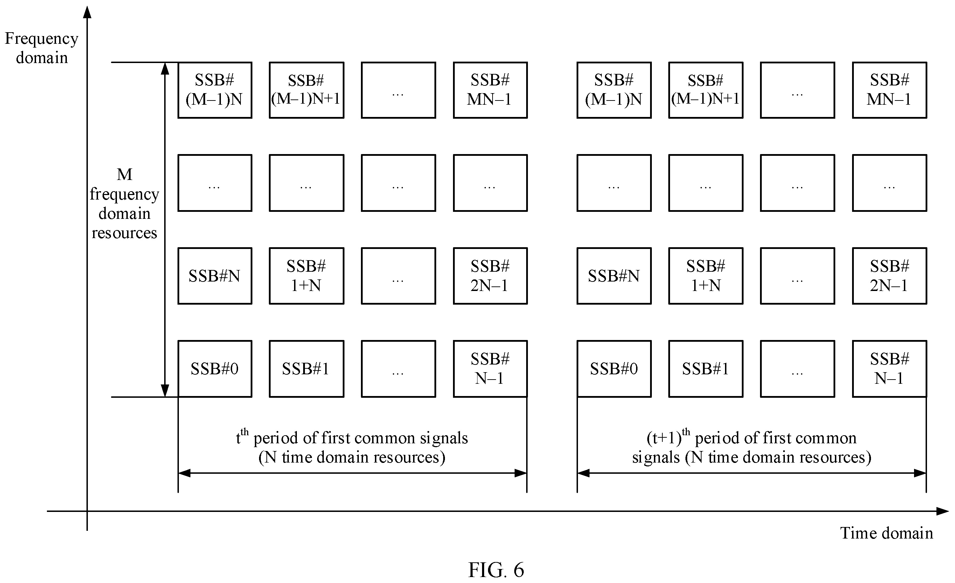

For example, FIG. 6 shows a possible example of time-frequency indexes corresponding to first common signals according to an embodiment of this application. Refer to FIG. 6. FIG. 6 uses an example in which the first common signal is an SSB. In actual application, the first common signal may also be another signal. A network apparatus may periodically send the first common signals. FIG. 6 shows two transmission periods of the first common signals, which are respectively a $t^{th}$ period of the first common signals and a $(t+1)^{th}$ period of the first common signals. For one transmission period of the first common signals, a plurality of time-frequency resources used to send the plurality of first common signals in the transmission period may include N time domain resources and M frequency domain resources. A quantity of the plurality of time-frequency resources is M×N, where × represents multiplication. M×N in embodiments of this application may also be represented by MN or NM, and MN or NM appearing in other locations in embodiments of this application may also be understood as M×N.

As shown in FIG. 6, the MN time-frequency resources are sorted in a time-first-then-frequency manner. A sequence number may be understood as a time-frequency index of a time-frequency resource, or may be referred to as a time-frequency index of a first common signal transmitted on a time-frequency resource. For example, in FIG. 6, for N time domain resources corresponding to a first frequency domain resource (or frequency position), time-frequency indexes of first common signals transmitted on the resources are sequentially 0 to (N-1) in a time domain order; then, for N time domain resources corresponding to a second frequency domain resource (or frequency position), time-frequency indexes of first common signals transmitted on the resources are sequentially N to (2N-1) in the time domain order; ..., and finally, for N time domain resources corresponding to an $(M-1)^{th}$ frequency domain resource (or frequency position), time-frequency indexes of first common signals transmitted on the resources are sequentially (M-1)N to (MN-1) in the time domain order. For example, as shown in FIG. 6, a time-frequency index of a $1^{st}$ first common signal is 0, and is represented by SSB#0 in FIG. 6. In the order of time domain first and then frequency domain, a time-frequency index of a $2^{nd}$ common signal is 1, and is represented by SSB#1 in FIG. 6. SSB#0 and SSB#1 have different time domain resources, and have a same frequency domain resource. Other time-frequency indexes are similar, and details are not described.

In Implementation A1, the plurality of time-frequency resources are sorted in the manner of time domain first and then frequency domain, and time-frequency indexes of the first common signals transmitted on the time-frequency resources are sequentially set based on the sorting manner. In this way, the setting on a single frequency can be consistent with an index manner of a first common signal (for example, an SSB) in 5G, and therefore can be better compatible with the conventional technology.

In Implementation A2, the time-frequency index corresponding to the first common signal indicates an order of the time-frequency resource of the first common signal among the plurality of time-frequency resources, and the plurality of time-frequency resources are ordered in a frequency-first-then-time manner.

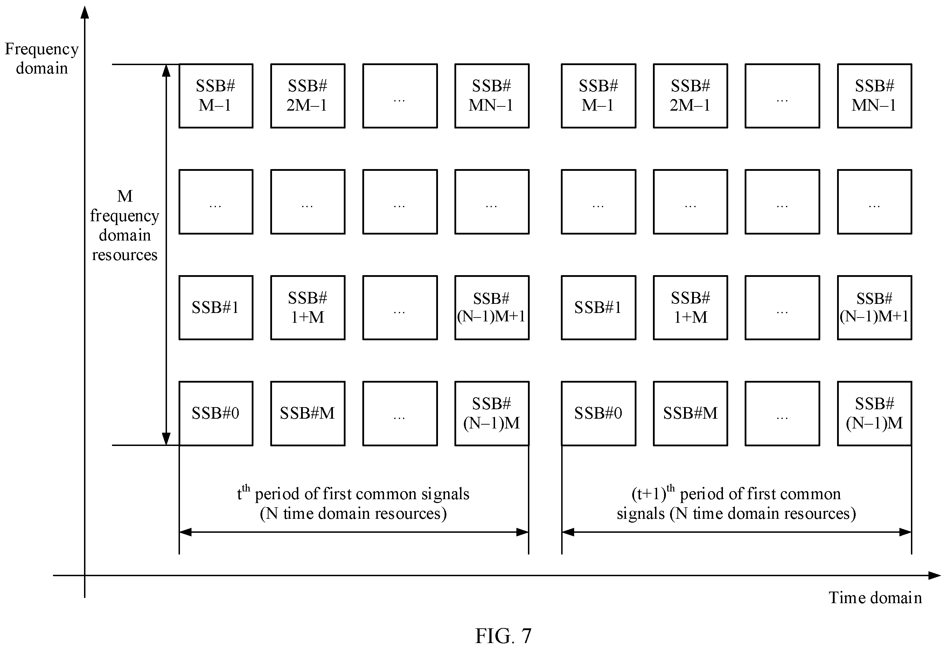

For example, FIG. 7 shows another possible example of time-frequency indexes corresponding to first common signals according to an embodiment of this application. FIG. 7 is similar to FIG. 6. For related content, refer to each other. Details are not described again. A difference from FIG. 6 lies in that MN time-frequency resources in FIG. 7 are ordered in a frequency-first-then-time manner. A sequence number may be understood as a time-frequency index of a time-frequency resource, or may be referred to as a time-frequency index of a first common signal transmitted on a time-frequency resource. For example, in FIG. 7, for M frequency domain resources corresponding to a first time domain resource (or time domain position), time-frequency indexes of first common signals transmitted on the resources are sequentially 0 to (M-1) in a frequency domain order; then, for M frequency domain resources corresponding to a second time domain resource, time-frequency indexes of first common signals transmitted on the resources are sequentially M to (2M-1) in the frequency domain order; ..., and finally, for M frequency domain resources corresponding to an $(N-1)^{th}$ time domain resource, time-frequency indexes of first common signals transmitted on the resources are sequentially (N-1)M to (MN-1) in the frequency domain order. For example, as shown in FIG. 7, a time-frequency index of a $1^{st}$ first common signal is 0, and is represented by SSB#0 in FIG. 7. In the order of frequency domain first and then time domain, a time-frequency index of a $2^{nd}$ common signal is 1, and is represented by SSB#1 in FIG. 7. SSB#0 and SSB#1 have different frequency domain resources, and have a same time domain resource. Other time-frequency indexes are similar, and details are not described.

In Implementation A2, the plurality of time-frequency resources are sorted in the manner of frequency domain first and then time domain, and time-frequency indexes of the first common signals transmitted on the time-frequency resources are sequentially set based on the sorting manner. This implementation provides more options for setting the time-frequency index, so that solution flexibility can be provided.

In Implementation A3, the time-frequency index corresponding to the first common signal includes a first value and a second value. The first value indicates an order of the time-frequency resource of the first common signal among the plurality of time-frequency resources in the time domain. The second value indicates an order of the time-frequency resource of the first common signal among the plurality of time-frequency resources in the frequency domain.

It may also be understood as that the first value indicates an order of the time domain resource of the first common signal among the N time domain resources, and the second value indicates an order of the frequency domain resource of the first common signal among the M frequency domain resources.

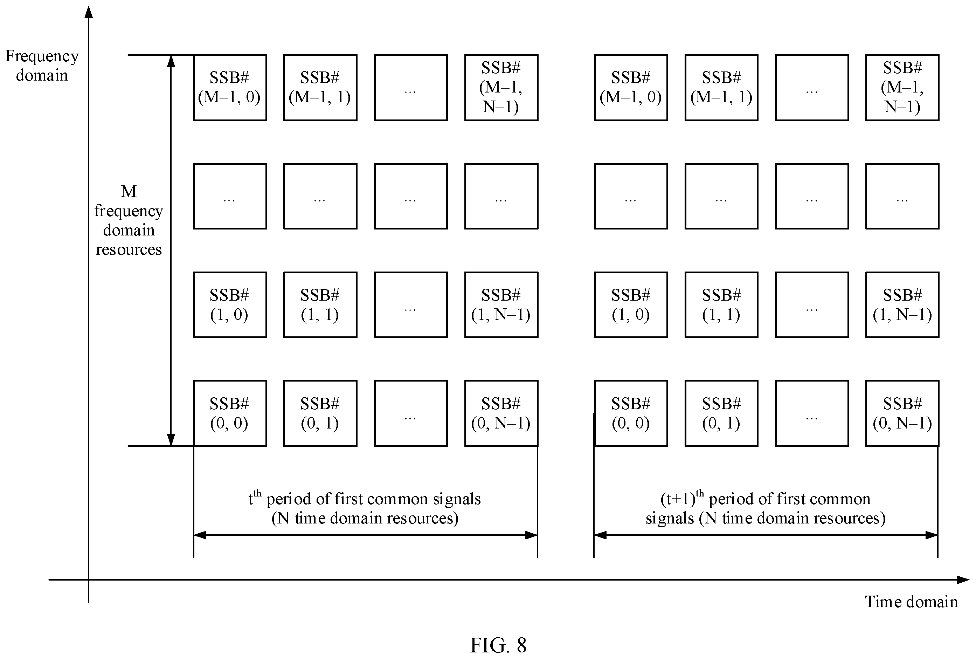

For example, FIG. 8 shows another possible example of time-frequency indexes corresponding to first common signals according to an embodiment of this application. FIG. 8 is similar to FIG. 6. For related content, refer to each other. Details are not described again. A difference from FIG. 6 lies in that a time-frequency index of each of MN time-frequency resources in FIG. 8 includes two parameters. A first parameter indicates an order of a time domain resource of a time-frequency resource in N time domain resources, and a second parameter indicates an order of a frequency domain resource of the time-frequency resource in M frequency domain resources. As shown in FIG. 8, first parameters of time-frequency indexes of the N time domain resources corresponding to a first frequency domain resource (or frequency position) are the same, and are all 0, second parameters of the time-frequency indexes of the resources are sequentially 0 to N-1 in a time domain order, and therefore, the time-frequency indexes of the N time-frequency resources corresponding to the first frequency domain resource are sequentially (0, 0) to (0, N-1), ..., and first parameters of time-frequency indexes of the N time domain resources corresponding to an (M-1)$^{th}$ frequency domain resource (or frequency position) are the same, and are all (M-1), second parameters of the time-frequency indexes of the resources are sequentially 0 to N-1 in the time domain order, and therefore, the time-frequency indexes of the N time-frequency resources corresponding to the (M-1)$^{th}$ frequency domain resource are sequentially (M-1, 0) to (M-1, N-1). For example, as shown in FIG. 6, SSB#(0, 0) and SSB#(0, 1) have a same frequency domain resource, and have different time domain resources. Other time-frequency indexes are similar, and details are not described.

In Implementation A3, a time-frequency index corresponding to each of the plurality of time-frequency resources may include two parameters, which indicate an order of the time-frequency resource in the time domain and an order of the time-frequency resource in the frequency domain respectively. This implementation provides more options for setting the time-frequency index, so that solution flexibility can be provided. In this solution, the terminal apparatus can more quickly determine the order of the time-frequency resource of the first common signal in the time domain and frequency domain. This solution can simplify operations on a terminal apparatus side.

In another possible implementation, a maximum value of a quantity of the plurality of first common signals sent by the network apparatus may be less than MN. Therefore, a quantity of resources actually used by the plurality of first common signals is also less than MN. For example, the plurality of first common signals use K resources. The K resources may be any K resources in the MN resources. In another possible implementation, in Implementation A1 or Implementation A2, the K resources may be resources whose time-frequency indexes are 0 to (K-1) in the MN resources, and K is a positive integer. In Implementation A3, the K resources may be first K resources that are in the MN resources and that are ordered in a time-first-then-frequency or frequency-first-then-time manner.

In embodiments of this application, a value of M and/or a value of N may have a plurality of implementations. The following provides descriptions by using some examples.

Example B1: The value of M may be any one of {1, 2, 4, 8, 12}.

Example B2: The value of N may be any one of {1, 2, 4, 8, 12, 16, 24, 32, 48, 64}.

Example B3: M and N may be a paired value. For example, the values of M and N may be (1, 4), where M is 1 and N is 4. Similarly, the values of M and N may be any one of the following: (4, 1), (2, 2), (1, 8), (8, 1), (4, 2), (2, 4), (1, 16), (2, 8), (4, 4), (8, 2), (1, 64), (2, 32), (4, 16), or (8, 8).

Example B4: M is associated with a carrier frequency and/or N is associated with a carrier frequency.

In Example B4, the value of M and the value of N may be separately selected. In a possible implementation, the value of M may be associated with the carrier frequency. For example, different carrier frequencies may correspond to different values of M. In another possible implementation, the value of N may be associated with the carrier frequency. For example, different carrier frequencies may correspond to different values of N. In this way, the value of M and/or the value of N may be set based on an actual situation of the carrier frequency, so that a candidate resource of the first common signal better matches an actually used carrier frequency.

For example, Table 2 shows a possible example of M and N corresponding to a carrier frequency range. As shown in Table 2, when a carrier frequency falls within a frequency range 0 to f0, a candidate value of M may be {M00, M01, ...}, and M may be one of the candidate values. When the carrier frequency falls within the carrier frequency range 0 to f0, a candidate value of N may be {N00, N01, ...}, and N may be one of the candidate values. Meanings of other rows are similar,

14

and details are not described.

Table 2 A possible example of M and N corresponding to a carrier frequency

| Carrier frequency range (megahertz (megahertz, MHz) or gigahertz (gigahertz, GHz)) | Candidate values of M | Candidate values of N |
|---|---|---|
| 0 to f0 | {M00, M01, ...} | {N00, N01, ...} |
| f0 to f1 | {M10, M11, ...} | {N10, N11, ...} |
| f1 to f2 | {M20, M21, ...} | {N20, N21, ...} |
| ... | ... | ... |

For example, Table 3 shows a possible example of M and N corresponding to a carrier frequency. As shown in Table 3, when a carrier frequency falls within a frequency range 0 MHz to 3000 MHz, candidate values of M may be {1, 2, 4}, and M may be one of the candidate values. When the carrier frequency falls within the carrier frequency range 0 MHz to 3000 MHz, candidate values of N may be {1, 2, 4}, and N may be one of the candidate values. Meanings of other rows are similar, and details are not described.

Table 3 A possible example of M and N corresponding to a carrier frequency

| Carrier frequency range | Candidate values of M | Candidate values of N |
|---|---|---|
| 0 MHz to 3000 MHz | {1, 2, 4} | {1, 2, 4} |
| 3000 MHz to 7.125 MHz | {1, 2, 4, 6, 8} | {1, 2, 4, 6, 8} |
| 7.125 MHz to 24250 MHz | {1, 2, 4, 6, 8} | {1, 2, 4, 8, 16, 24, 32} |
| 24250 MHz to 100000 MHz | {1, 2, 4, 6, 8} | {8, 16, 24, 32, 48, 64} |

All tables in embodiments of this application are examples, and do not constitute a limitation on a quantity of rows, a quantity of columns, or specific values in the tables. In actual application, any row or column in the table may be retained or deleted, or tables may be randomly recombined to form a new embodiment.

Example B5: A set of M and N values is associated with a carrier frequency.

In Example B5, the value of M and the value of N are a paired value, which may also be understood as that the group of values of M and N are associated with the carrier frequency. The group of values of M and N in embodiments of this application may also be represented by (M, N). For example, (M00, N00) may be understood as that the value of M is M00 and the value of N is N00. In this solution, the group of values of M and N may be preset, and then a group of preset associated values is selected based on the carrier frequency. In this solution, M and N are a group of values that are preset. Therefore, the group of values may be more preferred configurations. In addition, the carrier frequency can be directly associated with one or more groups of values of M and N. This can simplify a process of selecting M and N.

For example, Table 4 shows a possible example of M and N corresponding to a carrier frequency. As shown in Table 4, when a carrier frequency falls within a frequency range 0 to f0, paired candidate values of M and N may be {(M00, N00), (M01, N01), ...}. A paired value of M and N may be one of the paired candidate values. Meanings of other rows are similar, and details are not described.

Table 4 A possible example of M and N corresponding to a carrier frequency

| Carrier frequency range (MHz or GHz) | Candidate values of M and N |
|---|---|
| 0 to f0 | {(M00, N00), (M01, N01), ...} |
| f0 to f1 | {(M10, N10), (M11, N11), ...} |
| f1 to f2 | {(M20, N20), (M21, N21), ...} |
| ... | ... |

For example, Table 5 shows a possible example of M and N corresponding to a carrier frequency. As shown in Table 5, when a carrier frequency falls within a frequency range 0 MHz to 3000 MHz, paired candidate values of M and N may be {(1, 4), (4, 1), (2, 2)}. A paired value of M and N may be one of the paired candidate values, for example, M is 1 and N is 4; or M is 4 and N is 1. Meanings of other rows are similar, and details are not described.

Table 5 A possible example of M and N corresponding to a carrier frequency

| Carrier frequency range | Candidate values of M and N |
|---|---|
| 0 MHz to 3000 MHz | {(1, 4), (4, 1), (2, 2)} |
| 3000 MHz to 7.125 MHz | {(1, 8), (8, 1), (4, 2), (2, 4)} |
| 7.125 MHz to 24250 MHz | {(1, 16), (2, 8), (4, 4), (8, 2)} |
| 24250 MHz to 100000 MHz | {(1, 64), (2, 32), (4, 16), (8, 8)} |

In another possible implementation, different carrier frequency ranges may correspond to same or different quantities of paired candidate values. For example, a first carrier frequency range (for example, 0 to f0) corresponds to three paired candidate values of M and N, and a second carrier frequency range (for example, f0 to f1) corresponds to four paired candidate values of M and N.

In a possible implementation, the terminal apparatus may obtain values of M and N. There are a plurality of implementations. The following describes several implementations in which the terminal apparatus obtains M and N by using an example of Implementation C1, Implementation C2, and Implementation C3. In Implementation C1, the value of M may be a preset value and/or the value of N may be a preset value. In Implementation C2 and Implementation C3, the network apparatus may indicate the value of M and/or the value of N to the terminal apparatus. A difference lies in that: In Implementation C2, the network apparatus explicitly indicates the value of M and/or the value of N, and in Implementation C3, the network apparatus implicitly indicates the value of M and/or the value of N.

In Implementation C1, the value of M may be a preset value and/or the value of N may be a preset value.

In Implementation C1, the value of M and/or the value of N may be preconfigured. In this way, the network apparatus may not need to indicate the value of M and/or the value of N to the terminal apparatus. This can reduce signaling overheads.

In another possible implementation, the network apparatus may preconfigure an association relationship between a carrier frequency range and the value of M and/or the value of N, and the terminal apparatus determines the corresponding value of M and/or value of N based on the used carrier frequency range and the association relationship. When one carrier frequency range corresponds to a plurality of candidate values of M, one candidate value (for example, a smallest value) may be selected as the value of M according to a pre-agreed rule. Similarly, when one carrier frequency range corresponds to a plurality of candidate values of N, one candidate value (for example, a smallest value) may be selected as the value of M according to a pre-agreed rule.

In Implementation C2, the network apparatus sends, to the terminal apparatus, information indicating M, and/or the network apparatus may send, to the terminal apparatus, information indicating N.

Correspondingly, the terminal apparatus may receive the information indicating M and/or the information indicating N. The information indicating M and the information indicating N may be the same or different, or may be carried in same or different signaling. In this way, the network apparatus can indicate the value of M and/or the value of N by using signaling. This simplifies a process in which the terminal apparatus determines the value of M and/or the value of N, and simplifies operations on a terminal apparatus side.

In Implementation C2, the network apparatus may indicate the value of M and/or the value of N to the terminal apparatus by using some signaling or signals. For example, system information, a synchronization signal, or a demodulation reference signal is used.

In Implementation C3, the network apparatus implicitly indicates the value of M and/or the value of N to the terminal apparatus.

In Implementation C3, the network apparatus may indicate the value of M and/or the value of N by using some existing information. In this way, the network apparatus can implicitly indicate the value of M and/or the value of N. This can reduce signaling overheads. For example, the value of M and/or the value of N may be determined by using at least one of the following Information C3.1, Information C3.2, Information C3.3, or Information C3.4.

Information C3.1 is cell identity information associated with the first common signal.

For example, the cell identity information is a physical-layer cell identity (physical-layer cell identity).

In a possible implementation, the network apparatus may preconfigure an association relationship between the cell identity information and the value of M and/or the value of N, and the terminal apparatus determines the corresponding value of M and/or value of N based on the current cell identity information and the association relationship. When one piece of cell identity information corresponds to a plurality of candidate values of M, one candidate value (for example, a smallest value) may be selected as the value of M according to a pre-agreed rule. Similarly, when one piece of cell identity information corresponds to a plurality of candidate values of N, one candidate value (for example, a smallest value) may be selected as the value of M according to a pre-agreed rule.

Table 6 shows an example of a possible example of M and N corresponding to cell identity information. As shown in Table 6, when cell identity information falls within 0 to v0, candidate values of M may be {M00, M01, ...}, and M may be one of the candidate values. When the cell identity information falls within 0 to v0, candidate values of N may be {N00, N01, ...}, and N may be one of the candidate values. In a possible embodiment, v0 may be 336, and v1 may be 672. Meanings of other rows are similar, and details are not described.

Table 6 A possible example of M and N corresponding to cell identity information

| Cell identity information | Candidate values of M | Candidate values of N |
|---|---|---|
| 0 to v0 | {M00, M01, ...} | {N00, N01, ...} |
| v0 to v1 | {M10, M11, ...} | {N10, N11, ...} |
| v1 to v2 | {M20, M21, ...} | {N20, N21, ...} |
| ... | ... | ... |

Table 7 shows an example of a possible example of M and N corresponding to cell identity information. As shown in Table 7, when cell identity information falls within 0 to v0-1, paired candidate values of M and N may be {(M00, N00), (M01, N01), ...}. A paired value of M and N may be one of the paired candidate values. Meanings of other rows are similar, and details are not described.

Table 7 A possible example of M and N corresponding to cell identity information

| Cell identity information | Candidate values of M and N |
|---|---|
| 0 to v0-1 | {(M00, N00), (M01, N01), ...} |
| v0 to v1-1 | {(M10, N10), (M11, N11), ...} |
| v1 to v2 | {(M20, N20), (M21, N21), ...} |
| ... | ... |

Information C3.2 is an SSS sequence in the first common signal.

In a possible implementation, the network apparatus may preconfigure an association relationship between the SSS sequence and the value of M and/or the value of N, and the terminal apparatus determines the corresponding value of M and/or value of N based on the current SSS sequence and the association relationship. For example, when cell identity information falls within v0 to v1, candidate values of M may be {M10, M11, ...}, and M may be one of the candidate values. When the cell identity information falls within v0 to v1, candidate values of N may be {N10, N11, ...}. In a possible implementation, v0 may be 112, and v1 may be 224. A manner in which the network apparatus implicitly indicates the value of M and/or the value of N by using Information C3.2 is similar to a manner in which the network apparatus implicitly indicates the value of M and/or the value of N by using Information C3.1. Details are not described.

Information C3.3 is a PSS sequence in the first common signal.

In a possible implementation, the network apparatus may preconfigure an association relationship between the PSS sequence and the value of M and/or the value of N, and the terminal apparatus determines the corresponding value of M and/or value of N based on the current PSS sequence and the association relationship. A manner in which the network apparatus implicitly indicates the value of M and/or the value of N by using Information C3.3 is similar to the manner in which the network apparatus implicitly indicates the value of M and/or the value of N by using Information C3.1. Details are not described.

Information C3.4 is a PBCH DMRS sequence in the first common signal.

In a possible implementation, the network apparatus may preconfigure an association relationship between the value of M and/or the value of N and the PBCH DMRS sequence, and the terminal apparatus determines the corresponding value of M and/or value of N based on the association relationship and the current PBCH DMRS sequence. A manner in which the network apparatus implicitly indicates the value of M and/or the value of N by using Information C3.4 is similar to the manner in which the network apparatus implicitly indicates the value of M and/or the value of N by using Information C3.1. Details are not described.

In another possible implementation, the network apparatus determines the sending manner of the plurality of first common signals, and may indicate the sending manner to the terminal apparatus. The following describes several possible manners by using Example 1, Example 2, and Example 3.

Example 1: The network apparatus may implicitly indicate the sending manner of the plurality of first common signals to the terminal apparatus by indicating the value of M and/or the value of N to the terminal apparatus.

For example, when the network apparatus indicates that the value of M is 1, the terminal apparatus may determine that the plurality of first common signals are sent in the manner of time division multiplexing. For another example, when the network apparatus indicates that the value of N is 1, the terminal apparatus may determine that the plurality of first common signals are sent in the manner of frequency division multiplexing. For another example, when the network apparatus indicates that M is greater than 1 and N is greater than 1, the terminal apparatus may determine that the plurality of first common signals are sent in the manner of frequency division multiplexing and time division multiplexing.

Example 2: The network apparatus implicitly indicates the sending manner of the plurality of first common signals to the terminal apparatus by using at least one of a PSS sequence and/or an SSS sequence.

The terminal apparatus may pre-obtain an association relationship between at least one of the PSS sequence and/or the SSS sequence and the sending manner of the plurality of first common signals, and then determine the sending manner of the plurality of first common signals based on the association relationship and the at least one of the received PSS sequence and/or SSS sequence.

For example, when the PSS sequence belongs to 0 to 336, the terminal apparatus may determine that the plurality of first common signals are sent in the manner of frequency division multiplexing. For another example, when the PSS sequence belongs to 336 to 771, the terminal apparatus may determine that the plurality of first common signals are sent in the manner of frequency division multiplexing and time division multiplexing. For another example, when the PSS sequence does not belong to 0 to 771, the terminal apparatus may determine that the plurality of first common signals are sent in the manner of time division multiplexing.

Example 3: The network apparatus indicates the sending manner of the plurality of first common signals by using a PBCH DMRS.

In this example, the terminal apparatus may determine the sending manner of the plurality of first common signals based on information carried in the received PBCH DMRS.

In a possible implementation, the network apparatus periodically broadcasts the plurality of first common signals (for example, SSBs). For example, a period is 20 ms, and a time length occupied by a plurality of first common signals (for example, SSBs) in one period is four OFDM symbols. It is specified in a protocol that a maximum quantity of first common signals (for example, SSBs) may be preset to $L_{max}$, where $L_{max} = 4, 8, 10, 20, 64$, and corresponding candidate positions may be preset. Actually, a quantity of first common signals (for example, SSBs) transmitted in a network does not exceed $L_{max}$. Time positions of $L_{max}$ first common signals (for example, SSBs) are predefined in a protocol. In one period (or referred to as one transmission period of the first common signals), there are the following possible cases of a start OFDM symbol position of an $n^{th}$ first common signal (for example, SSB) (where n is also referred to as a time index of the first common signal (for example, the SSB), and the time index may indicate a time domain resource of the first common signal).

Example 1: $\{2, 8\} + 14 \cdot n$. Herein, $n = 0, 1$, or $n = 0, 1, 2, 3$, or $n = 0, 1, 2, 3, 4$, or $n = 0, 1, 2, 3, 4, 5, 6, 7, 8, 9$.

Example 2: $\{4, 8, 16, 20\} + 28 \cdot n$. Herein, $n = 0, 1$, or $n = 0, 1, 2, 3$, or $n = 0, 1, 2, 3, 4, 5, 6, 7, 8, 9$, or $n = 0, 1, 2, 3, 5, 6, 7, 8, 10, 11, 12, 13, 15, 16, 17, 18$.

Example 3: $\{8, 12, 16, 20, 32, 36, 40, 44\} + 56 \cdot n$. Herein, $n = 0, 1, 2, 3, 5, 6, 7, 8$.

Example 4: $\{2, 9\} + 14 - n$. Herein, $n = 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30$.

Step 403: The network apparatus sends a second common signal.

Correspondingly, the terminal apparatus receives the second common signal.

In embodiments of this application, the network apparatus may send a plurality of second common signals. The second common signal received by the terminal apparatus is one of the plurality of second common signals sent by the network apparatus. A first common signal may be associated with a second common signal. The terminal apparatus may receive, based on the first common signal, the second common signal or a control channel corresponding to the second common signal. The second common signal includes system information.

For example, the second common signal may include, for example, at least one of system information (system information block, SI), downlink control information (downlink control information, DCI), or a control resource set (control resource set, CORESET) corresponding to the first common signal.

For example, the control channel corresponding to the second common signal may include a physical downlink control channel (physical downlink control channel, PDCCH) and/or a physical downlink shared channel (Physical Downlink Shared Channel, PDSCH).

In a possible implementation, the second common signal includes a system information block (system information block, SIB). For example, an SIB 1 is included. The SIB 1 may carry information such as random access configuration information, or a PDCCH search space (search space 1) of a message 2/message 4, for example, necessary system information other than system information in an MIB, including an RACH configuration, or a time division duplexing (time division duplexing, TDD) frame structure configuration.

In embodiments of this application, after the terminal apparatus obtains the second common signal, the terminal may detect a system paging message, or the terminal sends random access to establish a radio resource control (radio resource control, RRC) connection to the base station. After the RRC connection is successfully established, the terminal and the base station can perform normal data transmission.

In embodiments of this application, there are a plurality of sending manners of two second common signals of the plurality of second common signals. For example, the two second common signals may be sent using division multiplexing, frequency division multiplexing, or a combination of both. The plurality of second common signals are sent by the network apparatus on a plurality of time-frequency resources, and there is an offset between frequencies of any two time-frequency resources among the plurality of time-frequency resources in the frequency domain. The two time-frequency resources may be two adjacent or non-adjacent time-frequency resources among the plurality of time-frequency resources. The frequency offset may be represented by a frequency value, or may be represented by a resource block quantity. The following uses Example 1 and Example 2 for description.

Example 1: A frequency-domain spacing between two time-frequency resources among the plurality of time-frequency resources used to transmit the plurality of second common signals is a second frequency value.

In a possible implementation, the second frequency value includes one of $F \times 1200$ kHz, $F \times 1.44$ MHz, $F \times 2.88$ MHz, $F \times 4.32$ MHz, $F \times 5.76$ MHz, $F \times 8.64$ MHz, $F \times 11.52$ MHz, $F \times 17.28$ MHz, $F \times 28.28$ MHz, $F \times 34.56$ MHz, $F \times 69.12$ MHz, or $F \times 138.24$ MHz, where $\times$ represents multiplication, and F is a positive integer. In embodiments of this application, the plurality of second common signals are sent on the plurality of time-frequency resources, and the frequency-domain spacing between the two time-frequency resources among the plurality of time-frequency resources is the second frequency value. The second frequency value matches a synchronization raster well. Therefore, the terminal apparatus searches for the second common signal based on the second frequency values. This can reduce difficulty of finding the second common signal, and improve efficiency of finding the second common signal.

Two second common signals that are adjacent (or non-adjacent) in the frequency domain at same time are used as an example. A frequency (which may be a center frequency or a start frequency) corresponding to an (m')th second common signal is f_m', and a frequency (which may be a center frequency or a start frequency) corresponding to an (m'+1)th second common signal is f_(m'+1). An offset (f_(m'+1)-f_m') between frequencies of time-frequency resources corresponding to the two second common signals is the second frequency value.

In another possible implementation, the second frequency value is related to a bandwidth of system information (or a bandwidth of a control channel resource CORESET).

For example, the second frequency value is the same as the bandwidth of the system information (or the bandwidth of the control channel resource CORESET), or the second frequency value is half of the bandwidth of the system information (or the bandwidth of the control channel resource CORESET), or the second frequency value is twice the bandwidth of the system information (or the bandwidth of the control channel resource CORESET).

In another possible implementation, a value of the second frequency value is related to a carrier frequency range (or a frequency band).

For example, different carrier frequency ranges (or frequency bands) may correspond to different second frequency values. Alternatively, it may be understood that different carrier frequency ranges (or frequency bands) may correspond to different values of the second frequency value. In this way, the value of the second frequency value can be set based on an actual situation of the carrier frequency range (or frequency band), so that the frequency-domain spacing between the two time-frequency resources better matches the actually used carrier frequency range (or frequency band).

In a possible implementation, the second frequency value may have a candidate value set, and the second frequency value may be selected from the candidate value set. In a possible implementation, a value, in the candidate value set, of the second frequency value may be related to a bandwidth of system information, a frequency band, or a carrier frequency range. For related content, refer to the foregoing descriptions. Details are not described again.

Example 2: A frequency-domain spacing between two time-frequency resources among the plurality of time-frequency resources used to transmit the plurality of second common signals is a second resource block quantity.

In a possible implementation, the second resource block quantity is $F \times 12$, where F is a positive integer. Using a resource block quantity as a unit of a frequency-domain spacing between two time-frequency resources, with the second resource block quantity being a multiple of 12 (given that a subband in a resource block consists of 12 subcarriers), this solution ensures greater compatibility existing standards. In addition, it allows a terminal apparatus to more easily determine a frequency domain position of another time-frequency resource based on a frequency domain position of a time-frequency resource. For more related content, refer to the related description of the first resource block quantity. This is similar, and details are not described.

In step 403, the terminal apparatus may determine, based on the received first common signal, a time-frequency resource of the second common signal associated with the first common signal.

In a possible implementation, a relationship between the frequency domain resource of the first common signal and the frequency domain resource of the second common signal may be shown in the following Implementation D1, Implementation D2, Implementation D3, Implementation D4, Implementation D5, and Implementation D6. The terminal apparatus may determine the frequency domain resource of the second common signal based on the frequency domain resource of the first common signal and the relationship between the frequency domain resource of the first common signal and the frequency domain resource of the second common signal.

Implementation D1: A start frequency of the frequency domain resource of the first common signal is the same as a start frequency of the frequency domain resource of the second common signal and/or a center frequency of the frequency domain resource of the first common signal is the same as a center frequency of the frequency domain resource of the second common signal.

In Implementation D1, in a possible implementation, the frequency domain resource of the first common signal is the same as the frequency domain resource of the second common signal.

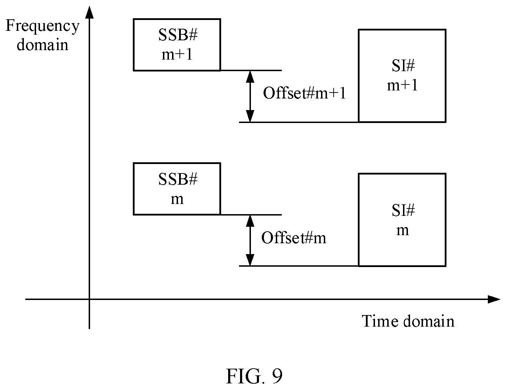

For example, FIG. 9 is a diagram of a relationship between resource positions of first common signals and second common signals according to an embodiment of this application. In

FIG. 9, an example in which the first common signals are SSBs and the second common signals are SI is used for description. The two first common signals shown in FIG. 9 are SSB#m+1 and SSB#m. SI associated with SSB#m is SI#m, and SI associated with the SSB#m+1 is SI#m+1. A frequency offset between a frequency (a start frequency or a center frequency) of SSB#m and a frequency (a start frequency or a center frequency) of SI#m is represented by offset#m. In FIG. 9, a frequency offset between a frequency (a start frequency or a center frequency) of SSB#m+1 and a frequency (a start frequency or a center frequency) of SI#m+1 is represented by offset#m+1.

In Implementation D1, the start frequency of the frequency domain resource of the first common signal is the same as the start frequency of the frequency domain resource of the second common signal and/or the center frequency of the frequency domain resource of the first common signal is the same as the center frequency of the frequency domain resource of the second common signal. For example, offset#m is 0. In this case, the start frequency of SSB#m is the same as the start frequency of SI#m.

In the foregoing implementation, bandwidths of the first common signal and the second common signal can be aligned, so that a process in which the terminal apparatus receives the first common signal and the second common signal can be simplified.

Implementation D2: A frequency of the frequency domain resource of the first common signal and a frequency of the frequency domain resource of the second common signal are spaced by a second value, where the second value is a preset value.

In another possible implementation, a frequency offset between a frequency of any first common signal and a frequency of a second common signal corresponding to the first common signal is a preset value. For example, in FIG. 9, offset#m+1 is equal to offset#m, and both are preset values.

In another possible implementation, bandwidths of the two second common signals may be the same. For example, bandwidths of SI#m+1 and SI#m may be the same.

Implementation D3: A frequency (a start frequency or a center frequency) of the frequency domain resource of the first common signal and a frequency (a start frequency or a center frequency) of the frequency domain resource of the second common signal are spaced by a third value, where the third value is associated with a bandwidth of the second common signal.

For example, the third value is half or an integer multiple of the bandwidth of the second common signal.

Implementation D4: A frequency of the frequency domain resource of the first common signal and a frequency of the frequency domain resource of the second common signal are spaced by a fourth value, where the fourth value is associated with a difference between a bandwidth of the second common signal and a bandwidth of the first common signal.

For example, the fourth value is half or an integer multiple of the difference between the bandwidth of the second common signal and the bandwidth of the first common signal.

Implementation D5: A frequency offset between the frequency domain resource of the first common signal and a frequency domain resource of another first common signal is associated with a frequency offset between the frequency domain resource of the first common signal and the frequency domain resource of the second common signal.

For example, in FIG. 9, an offset between a frequency (a start frequency or a center frequency) of SSB#m and a frequency (a start frequency or a center frequency) of SSB#m+1 is associated with an offset (offset#m) between the frequency (the start frequency or the center frequency) of SSB#m and a frequency (a start frequency or a center frequency) of SI#m.

Implementation D6: The frequency domain resource of the first common signal and the frequency domain resource of the second common signal satisfy a specific rule.

In a possible implementation, the frequency domain resource of the first common signal and a frequency (a start frequency or a center frequency) of the second common signal satisfy a specific rule.

For example, a quantity of frequency domain resources among the plurality of time-frequency resources used for transmitting the first common signals (M) is different from that for transmitting the plurality of second common signals (M').

For example, M is 4, and M' is 2. In this case, a relationship between the M frequency domain resources for transmitting the first common signals and the M' frequency domain resources for transmitting the second common signals may be established according to a specific rule or formula. For example, a rule may be set as follows: The M frequency domain resources for transmitting the first common signals are divided into M' groups, each corresponding to the M' frequency domain resources for transmitting the second common signals. A quantity of frequency domain resources in any two of the M' frequency domain resource groups may be the same or different. For example, if M is divisible by M', letting k0 be a quotient of M and M', then every k0 consecutive resources among the M frequency domain resources for transmitting the first common signals may form a resource group, resulting in M' frequency domain resource groups. There are a plurality of frequency domain resource group division manners, and this is not limited in embodiments of this application.

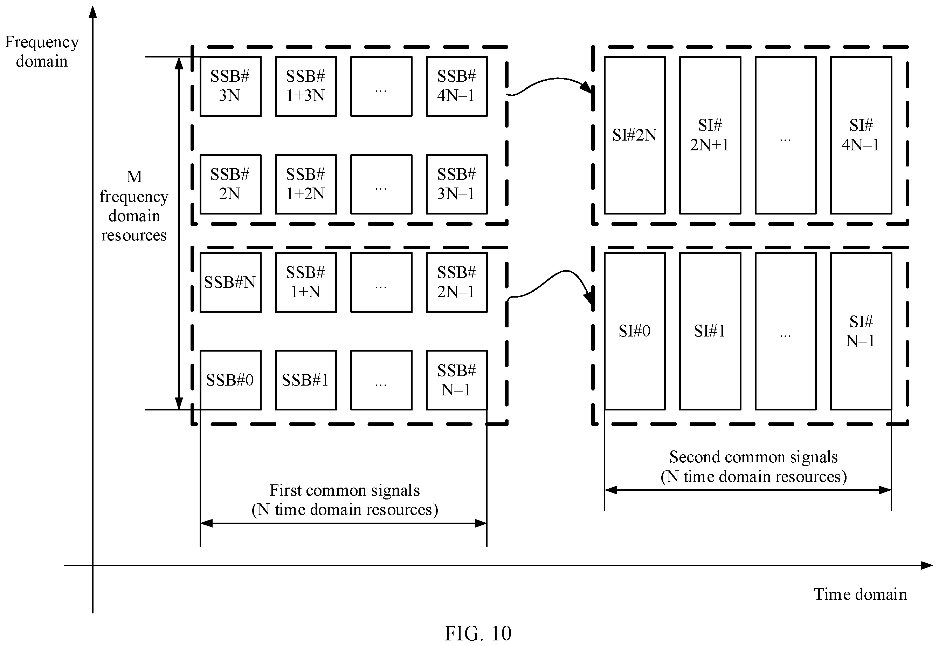

FIG. 10 is a diagram of another relationship between resource positions of first common signals and second common signals according to an embodiment of this application. In the example shown in FIG. 10, M (the quantity of frequency domain resources for transmitting the first common signals, which are SSBs) is 4, and M' (the quantity of frequency domain resources for transmitting the second common signals, which are SI) is 2. As shown in FIG. 10, first common signals corresponding to two consecutive frequency resources among the M frequency domain resources for transmitting the first common signals are associated with second common signals in the M' frequency domain resources for transmitting the second common signals. Specifically, SSBs (SSB#0, SSB#1, ..., SSB#N-1, SSB#N, SSB#1+N, ..., and SSB#2N-1) corresponding to first two frequency domain resources among the M frequency domain resources in FIG. 10 are associated with SI#0, SSB#1, ..., and SI#N-1 whose frequency domain positions correspond to a first frequency domain resource among the M' frequency domain resources. For another example, SSBs (SSB#2N, SSB#1+2N, ..., SSB#3N-1, SSB#3N, SSB#1+3N, ..., and SSB#4N-1) corresponding to a third frequency domain resource and a fourth frequency domain resource among the M frequency domain resources in FIG. 10 are associated with SI#2N, SSB#2N+1, ..., and SI#4N-1 whose frequency domain positions correspond to a second frequency domain resource among the M' frequency domain resources. To be specific, in the example shown in FIG. 10, first common signals corresponding to every k0 (k0=M/M'=2) consecutive frequency domain resources among the M frequency domain resources correspond to one group, and first common signals corresponding to an $(m')^{th}$ group of frequency domain resources correspond to second common signals corresponding to an $(m')^{th}$ frequency domain resource among the M' frequency domain resources.

In all the accompanying drawings of embodiments of this application, M and N may respectively correspond to a maximum candidate value of a quantity of frequency domain and a maximum candidate value of a quantity of time domain among candidate resources of the first common signals, and M' and N' may respectively correspond to a maximum candidate value of a quantity of frequency domain and a maximum candidate value of a quantity of time domain among candidate resources of the second common signal. In actual application, for frequency domain resources used to transmit the first common signals, a quantity of first common signals actually sent on the frequency domain resources may be adjusted based on an actual requirement; or for time domain resources used to transmit the first common signals, a quantity of first common signals actually sent may be adjusted based on an actual requirement. For frequency domain resources used to transmit the second common signals, a quantity of second common signals actually sent on the frequency domain resources may be adjusted based on an actual requirement; or for time domain resources used to transmit the second common signals, a quantity of second common signals actually sent may be adjusted based on an actual requirement.

As another example, when a quantity of frequency domain resources among the plurality of time-frequency resources for transmitting the first common signals (M) is different from a quantity of frequency domain resources among the plurality of resources for transmitting the plurality of second common signals (M'), a relationship between the M frequency domain resources for transmitting the first common signals and the M' frequency domain resources for transmitting the second common signals may be established according to a formula. For example, the formula may be set as follows: k2 = k1%M'. Herein, k1 is a sequence number of the frequency domain resource used to transmit the first common signal in the M frequency domain resources, k2 is a sequence number of the frequency domain resource that is used to transmit the second common signal in the M' frequency domain resources and that corresponds to the frequency domain resource k1, % represents a modulo operation, and M' is the quantity of frequency domain resources used to transmit the second common signals. The sequence number of the frequency domain resource in the M frequency domain resources may indicate an order and may range from 0. The sequence number of the frequency domain resource in the M' frequency domain resources may indicate an order and may range from 0.

In another possible implementation, a quantity of frequency domain resources among the plurality of time-frequency resources for transmitting the first common signals (M) may be different from the quantity of frequency domain resources among the plurality of resources for transmitting the plurality of second common signals (M'), where M' is a positive integer. Alternatively, a quantity of time domain resources among the plurality of time-frequency resources used to transmit the first common signals (N) may be different from a quantity of time domain resources among the plurality of resources used to transmit the plurality of second common signals (N'), where N' is a positive integer. However, a total quantity M×N of resources among the plurality of time-frequency resources used to transmit the first common signals is equal to a total quantity M'×N' of resources among the plurality of resources used to transmit the plurality of second common signals. In embodiments of this application, × represents multiplication. In this case, a correspondence between the plurality of time-frequency resources used to transmit the first common signals and the plurality of resources used to transmit the plurality of second common signals may be established according to a specific rule (or formula), and the plurality of time-frequency resources may be in one-to-one correspondence with the plurality of resources.

The plurality of first common signals may be frequency division multiplexed. Therefore, the terminal apparatus can determine a relationship between frequency domain resources of the first common signal and the second common signal associated with the first common signal in any one of the foregoing several implementations. Consequently, the terminal apparatus can determine a frequency domain resource position of the second common signal based on the relationship.

In a possible implementation, there may also be an association relationship between the time domain resource of the first common signal and the time domain resource of the second common signal, for example, as shown in the following Implementation E1, Implementation E2, and Implementation E3.

In Implementation E1, the time domain resource of the first common signal is the same as the time domain resource of the second common signal. In this way, the terminal apparatus can more quickly obtain the second common signal.

In Implementation E2, the time domain resource of the second common signal is associated with at least one of the time domain resource of the first common signal, a subcarrier spacing of the first common signal, the quantity of frequency domain resources in the plurality of time-frequency resources used to transmit the first common signals, or the time-frequency index of the first common signal. In this way, because the time-frequency index is affected by a plurality of frequency domain resources, and a process of determining the time domain resource of the second common signal is further combined with a factor of the quantity of frequency domain resources in the plurality of time-frequency resources used to transmit the first common signals, the process of determining the time domain resource of the second common signal can be more applicable to the solution of frequency division multiplexing of the plurality of time-frequency resources.

For example, a time domain resource position $n_0$ of the second resource satisfies the following Formula (1):

$$n_0 = \left( O \cdot 2^\mu + \lfloor \lfloor i/M \rfloor \cdot X \rfloor \right) \text{ Formula (1)}$$

In Formula (1), $\mu$ is the subcarrier spacing of the first common signal, $O$ is a value indicated by master system information or a preset value, $X$ is a value indicated by the master system information or a preset value, $i$ is the time-frequency index of the first common signal, $M$ is the quantity of frequency domain resources in the plurality of time-frequency resources used to transmit the first common signals, $\lfloor \cdot \rfloor$ represents rounding down, and $i$ may be the time-frequency index of the first common signal in the solution provided in Implementation A1 or Implementation A2. In the foregoing Implementation A3, $i$ may be an order of the time-frequency resource corresponding to the first common signal in the MN time-frequency resources in Implementation A3. The M×N time-frequency resources may be ordered in a frequency-first-then-time or time-first-then-frequency manner. For related content, refer to Implementation A1 and Implementation A2. Details are not described.

After receiving the first common signal, the terminal apparatus may attempt to detect the second common signal (for example, the second common signal may be a SIB1 PDCCH) in a slot $n_0$ or slot $n_0 + 1$ based on the time-frequency index i corresponding to the first common signal. If the PDCCH is detected, a corresponding PDSCH is continuously received, and a subsequent process is performed. Different first common signals (or different beams) correspond to same PDSCH load content, but may correspond to different modulation orders, code rates, time, and frequency positions. In the foregoing solution, the time-frequency index is affected by the plurality of frequency domain resources, and the factor of the quantity of frequency domain resources is further considered in the foregoing formula. Therefore, the formula is more applicable to the solution of frequency division multiplexing of the plurality of time-frequency resources.

In Implementation E3, the time domain resource of the second common signal is associated with at least one of the time domain resource of the first common signal, a subcarrier spacing of the first common signal, the quantity of frequency domain resources in the plurality of resources used to transmit the plurality of second common signals, or the time-frequency index of the first common signal. In this way, because the time-frequency index is affected by a plurality of frequency domain resources, and a process of determining the time domain resource of the second common signal is further combined with a factor of the quantity of frequency domain resources in the plurality of resources used to transmit the plurality of second common signals, the process of determining the time domain resource of the second common signal can be more applicable to the solution of frequency division multiplexing of the plurality of time-frequency resources.

For example, a time domain resource position $n_0$ of the second resource satisfies the following Formula (2):

$$n_0 = \left( O \cdot 2^\mu + \lfloor \lfloor i/\text{M'} \rfloor \cdot X \rfloor \right) \text{ Formula (2)}$$

In Formula (2), M' is the quantity of frequency domain resources in the plurality of resources used to transmit the plurality of second common signals. For related content of $\mu$, O, X, i, and $\lfloor \cdot \rfloor$, refer to related descriptions in the foregoing Formula (1). Details are not described.

In a possible implementation, to help send a common signal (for example, the first common signal and the second common signal) at higher transmit power or using customized hardware, the common signal (for example, the first common signal and the second common signal) may be sent via different hardware architectures (or sent in different sending manners). The following describes two possible implementations by using Example 1 and Example 2.

Example 1: The common signal (for example, the first common signal and the second common signal) and another downlink signal (for example, a data signal) are sent through different radio frequency channels (or on different antenna ports, or based on different spatial relations).

For example, the plurality of first common signals are sent through a first radio frequency channel. The plurality of second common signals are also sent through the first radio frequency channel. The first radio frequency channel cannot be used to send another non-common signal, for example, the data signal. In other words, all signals sent through the first radio frequency channel are common signals. The data signal may be sent through a radio frequency channel other than the first radio frequency channel. It may also be understood that the data signal and the common signal are sent through different radio frequency channels. In this way, the common signal can be sent through a dedicated radio frequency channel, so that a design parameter of the radio frequency channel can be more matched with sending of the common signal.

For another example, the plurality of first common signals are sent on a first antenna port. The plurality of second common signals are also sent on the first antenna port. The first antenna port cannot be used to send another non-common signal, for example, the data signal. In other words, all signals sent on the first antenna port are common signals. The data signal may be sent on an antenna port other than the first antenna port. It may also be understood that the data signal and the common signal are sent on different antenna ports. In this way, the common signal can be sent on a dedicated antenna port, so that a design parameter of the antenna port can be more matched with sending of the common signal.

For another example, spatial relations of the plurality of first common signals are first spatial relations. Spatial relations of the plurality of second common signals are also the first spatial relations. In a possible implementation, a spatial relation of the common signal (for example, the first common signal or the second common signal) sent by the network apparatus is associated with a reference signal #1. The spatial relation associated with the reference signal #1 may be considered as an example of the first spatial relation. That a spatial relation of another signal (for example, the data signal) is different from the first spatial relation may also be understood as that a reference signal associated with the spatial relation of the another signal (for example, the data signal) is different from the reference signal #1. It may also be understood that the data signal and the common signal are sent based on different spatial relations (or beams). In this way, the common signal can be sent based on a dedicated spatial relation, and then the network apparatus can select a spatial relation that better matches sending of the common signal, thereby optimizing a communication process.

The implementation solution provided in Example 1 may be used in combination with the implementation provided in at least one of FIG. 4, FIG. 5, FIG. 6, FIG. 7, FIG. 8, or FIG. 9. In a possible implementation, the plurality of first common signals are sent by the network apparatus on the plurality of time-frequency resources. Two first common signals among the plurality of first common signals may have same time domain resources, and may have different frequency domain resources. With reference to Example 1, for example, for the two first common signals among the plurality of first common signals, the two first common signals sent at same time through a same radio frequency channel (or on a same antenna port) are located at different frequencies. For another example, for the two first common signals among the plurality of first common signals, the two first common signals sent at same time through a same radio frequency channel (or on a same antenna port) are located at same or different frequencies.

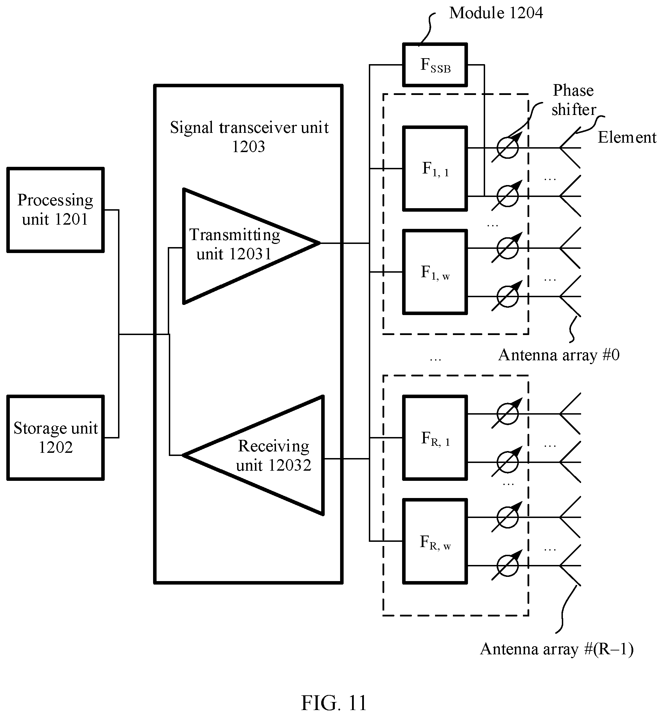

FIG. 11 is a diagram of an example of a possible structure of a communication apparatus according to an embodiment of this application. In FIG. 11, a box in a module 1204 may represent a digital channel, and $F_{SSB}$, $F_{1,1}$, $F_{1,W}$, $F_{R,1}$, and $F_{R,W}$ in boxes may be understood as digital precoding weights. A phase shifter may represent an analog channel. One phase shifter may be connected to one element or a plurality of elements, that is, one phase shifter may control one or more elements, or a plurality of phase shifters are cross-connected to a plurality of elements. A plurality of elements may form an antenna array. FIG. 11 shows two antenna arrays, for example, an antenna array #0 and an antenna array #(R-1).

The communication apparatus may be a network apparatus. As shown in FIG. 11, the network apparatus includes a plurality of radio frequency channels. A radio frequency channel corresponding to $F_{SSB}$ may be used to transmit a common signal (for example, the first common signal and the second common signal), and another radio frequency channel may be used to transmit a signal (for example, a data signal) other than the common signal.

In FIG. 11, the radio frequency channel may include a radio frequency receive channel (RF receive path) and a radio frequency transmit channel (RF transmit path). The radio frequency channel may also be referred to as a radio frequency subsystem, and may be jointly formed by a radio frequency integrated circuit and a radio frequency front-end device. The radio frequency receive channel may receive a radio frequency signal through an antenna, perform processing (for example, amplification, filtering, and down-conversion) on the radio frequency signal to obtain a baseband signal, and transfer the baseband signal to a baseband subsystem. The radio frequency transmit channel may receive a baseband signal from the baseband subsystem, perform processing (such as up-conversion, amplification, and filtering) on the baseband signal to obtain a radio frequency signal, and finally radiate the radio frequency signal to space through an antenna. The radio frequency integrated circuit may be referred to as a radio frequency processing chip or a radio frequency chip.

Specifically, the radio frequency subsystem may include electronic devices such as an antenna switch, an antenna tuner, a low noise amplifier (low noise amplifier, LNA), a power amplifier (power amplifier, PA), a mixer (mixer), a local oscillator (local oscillator, LO), and a filter (filter), and the electronic devices may be integrated into one or more chips as required. The radio frequency integrated circuit may be referred to as a radio frequency processing chip or a radio frequency chip. The radio frequency front-end device may also be an independent chip. The radio frequency chip is also sometimes referred to as a receiver (receiver), a transmitter (transmitter), a transceiver (transceiver), or a transceiver machine. With evolution of technologies, an antenna sometimes may also be considered as a part of the radio frequency subsystem, and may be integrated into a chip of the radio frequency subsystem. The antenna, the radio frequency front-end device, and the radio frequency chip can all be manufactured and sold separately. Certainly, the radio frequency subsystem may also use different devices or different integration manners based on power consumption and performance requirements. For example, some devices belonging to a radio frequency front-end are integrated into the radio frequency chip, or even both the antenna and the radio frequency front-end device are integrated into the radio frequency chip. The radio frequency chip may also be referred to as a radio frequency antenna module or an antenna module.

The baseband subsystem processes a baseband signal, and a function of the baseband subsystem is similar to a function of the radio frequency subsystem, that is, processes a radio frequency signal. The baseband subsystem may extract wanted information or data bits from the baseband signal, or convert information or data bits into a to-be-sent baseband signal. The information or data bits may be data representing user data or control information such as voice, text, and a video. For example, the baseband subsystem may implement signal processing operations such as modulation and demodulation, and encoding and decoding. For different radio access technologies, for example, 5G NR and 4G LTE, baseband signal processing operations are not completely the same.

In addition, because a radio frequency signal is usually an analog signal, and a signal processed by the baseband subsystem is mainly a digital signal, an analog/digital conversion component is further required in the communication apparatus. In embodiments of this application, the analog/digital conversion component may be disposed in the baseband subsystem or in the radio frequency subsystem. The analog/digital conversion component includes an analog to digital converter (analog to digital converter, ADC) that converts an analog signal into a digital signal, and a digital to analog converter (digital to analog converter, DAC) that converts a digital signal into an analog signal.

As shown in FIG. 11, the communication apparatus may further include a processing unit 1201. In FIG. 11, the communication apparatus may include one or more processors. A plurality of processors may be a plurality of processors of a same type, or may include a combination of a plurality of types of processors. In this application, the processor may be a processor for a general purpose, or may be a processor designed for a specific field. For example, the processor may be a central processing unit (center processing unit, CPU), a digital signal processor (digital signal processor, DSP), or a micro control unit (micro control unit, MCU). Alternatively, the processor may be a graphics processing unit (graphics processing unit, GPU), an image signal processor (image signal processing, ISP), an audio signal processor (audio signal processor, ASP), or an AI processor specially designed for an artificial intelligence (artificial intelligence, AI) application. The AI processor includes but is not limited to a neural network processing unit (neural network processing unit, NPU), a tensor processing unit (tensor processing unit, TPU), and a processor referred to as an AI engine.

As shown in FIG. 11, the communication apparatus may further include a signal transceiver unit 1203. The signal transceiver unit 1203 may include a transmitting unit 12031 and a receiving unit 12032. The transmitting unit 12031 may be configured to send a signal, and the receiving unit 12032 may be configured to receive a signal.

The communication apparatus may further include a storage unit 1202. The storage shown in FIG. 11 may include a memory and a large-capacity storage, and may further include one or more caches in an application subsystem and a baseband subsystem. In a specific implementation, the storage may be classified into a volatile memory (volatile memory) and a non-volatile memory (non-volatile memory, NVM). The volatile memory is a memory in which data stored in the memory is lost when a power supply is interrupted. At present, the volatile memory is mainly a random access memory (random access memory, RAM), including a static random access memory (static RAM, SRAM) and a dynamic random access memory (dynamic RAM, DRAM). The non-volatile memory is a memory in which data stored in the memory is not lost even if a power supply is interrupted. A common non-volatile memory includes a read only memory (read only memory, ROM), an optical disc, a magnetic disk, various storages based on a flash memory (flash memory) technology, and the like. Generally, the volatile memory may be used for the memory and the cache, and the non-volatile memory, for example, a flash memory, may be used for the large-capacity storage.

Example 2: Different common signals (for example, the plurality of first common signals, or the plurality of second common signals) are sent through different radio frequency channels (or on different antenna ports, or based on different spatial relations).

For example, two first common signals among the plurality of first common signals are sent by the network apparatus through two different radio frequency channels. For another example, two second common signals are sent by the network apparatus through two different radio frequency channels. For another example, the first common signal and the second common signal are sent by the network apparatus through two different radio frequency channels. This can improve transmit power of the common signal.

For another example, two first common signals among the plurality of first common signals are sent by the network apparatus on two different antenna ports. For another example, two second common signals are sent by the network apparatus on two different antenna ports. For another example, the first common signal and the second common signal are sent by the network apparatus on two different antenna ports. This can improve transmit power of the common signal.

For another example, spatial relations of two first common signals among the plurality of first common signals are different. In a possible implementation, reference signals associated with the spatial relations of the two first common signals sent by the network apparatus are different. This can improve transmit power of the common signal.

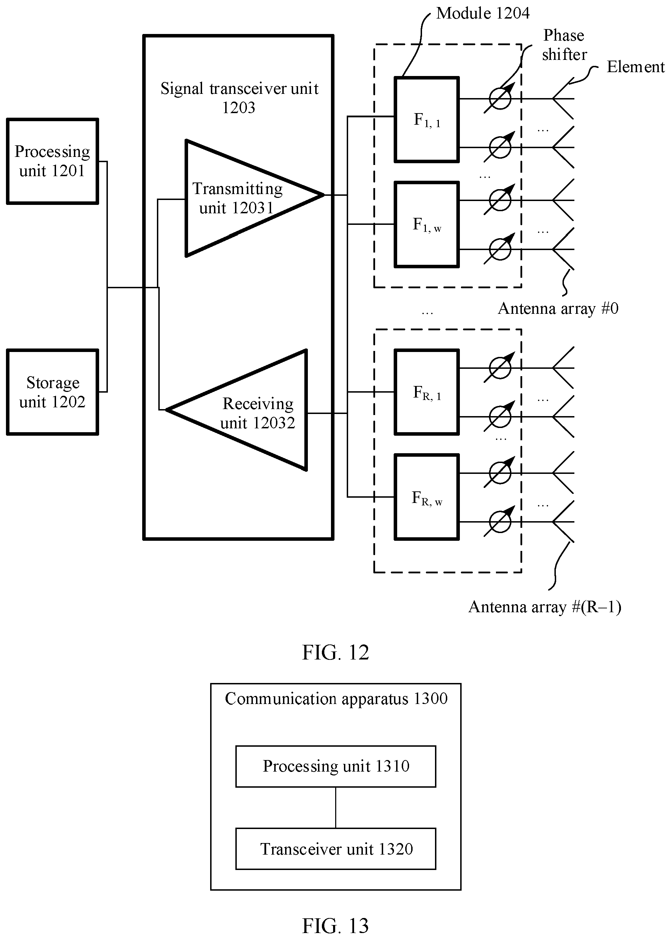

FIG. 12 is a diagram of an example of a possible structure of another communication apparatus according to an embodiment of this application. Content in FIG. 12 is similar to that in FIG. 11, and a difference from FIG. 11 lies in that $F_{SSB}$ is not described in FIG. 12. The communication apparatus may be a network apparatus. As shown in FIG. 12, the network apparatus includes a plurality of radio frequency channels. Different common signals may be sent through different radio frequency channels. For example, a radio frequency channel corresponding to an antenna array #0 may be used to transmit a first common signal #0, and a radio frequency channel corresponding to an antenna array #(R-1) may be used to transmit a first common signal #(R-1). For other content, refer to related descriptions in FIG. 11. Details are not described.

The implementation solution provided in FIG. 12 in embodiments of this application may be used in combination with the implementation provided in at least one of FIG. 4, FIG. 5, FIG. 6, FIG. 7, FIG. 8, or FIG. 9. In a possible implementation, the plurality of first common signals are sent by the network apparatus on the plurality of time-frequency resources. Two first common signals among the plurality of first common signals may have same time domain resources, and may have different frequency domain resources. With reference to FIG. 12, for example, for the two first common signals among the plurality of first common signals, the two first common signals sent at same time through different radio frequency channels (or on different antenna ports) are located at different frequencies. For another example, for the two first common signals among the plurality of first common signals, the two first common signals sent at different time through different radio frequency channels (or on different antenna ports) are located at same or different frequencies.

It may be understood that to implement the functions in the foregoing embodiments, the terminal apparatus and the network apparatus may include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

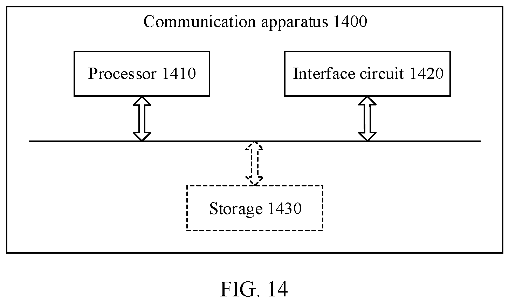

FIG. 13 and FIG. 14 are diagrams of possible structures of several communication apparatuses according to embodiments of this application. The communication apparatuses may be configured to implement the functions of the terminal or the base station in the foregoing method embodiments, and therefore can also achieve beneficial effect of the foregoing method embodiments. In embodiments of this application, the communication apparatus may be the terminal device shown in FIG. 1, or may be the network device (for example, the RAN node) shown in FIG. 1, or may be a chip system used in the terminal device or the network device shown in FIG. 1.

As shown in FIG. 13, a communication apparatus 1300 includes a processing unit 1310 and a transceiver unit 1320. The communication apparatus 1300 is configured to implement the function of the terminal apparatus or the network apparatus in the method embodiment shown in FIG. 4.

When the communication apparatus 1300 is configured to implement the function of the terminal apparatus in the method embodiment shown in FIG. 4, the processing unit 1310 is configured to receive a first common signal via the transceiver unit 1320.

In a possible implementation, when the communication apparatus 1300 is configured to implement the function of the terminal apparatus in the method embodiment shown in FIG. 4, the processing unit 1310 is further configured to receive a second common signal via the transceiver unit 1320.

When the communication apparatus 1300 is configured to implement the function of the second apparatus in the method embodiment shown in FIG. 4, the processing unit 1310 is configured to send a plurality of first common signals via the transceiver unit 1320.

In a possible implementation, when the communication apparatus 1300 is configured to implement the function of the network apparatus in the method embodiment shown in FIG. 4, the processing unit 1310 is further configured to send a second common signal via the transceiver unit 1320.

For more detailed descriptions of the processing unit 1310 and the transceiver unit 1320, refer to related descriptions in the method embodiment shown in FIG. 4.

As shown in FIG. 14, a communication apparatus 1400 includes a processor 1410 and an interface circuit 1420.

The processor 1410 and the interface circuit 1420 are coupled to each other. It can be understood that the interface circuit 1420 may be a transceiver or an input/output interface. Optionally, the communication apparatus 1400 may further include a storage 1430, configured to: store instructions to be executed by the processor 1410, store input data required for running instructions by the processor 1410, or store data generated after the processor 1410 runs instructions.

When the communication apparatus 1400 is configured to implement the method shown in FIG. 4, the processor 1410 is configured to implement the function of the processing unit 1310, and the interface circuit 1420 is configured to implement the function of the transceiver unit 1320.

When the communication apparatus is a chip used in a terminal, the chip in the terminal implements the function of the terminal apparatus in the foregoing method embodiment. That the chip in the terminal receives information from a base station may be understood to that the information is first received by another module (for example, a radio frequency module or an antenna) in the terminal, and then sent by the module to the chip in the terminal. That the chip in the terminal sends information to a base station may be understood to that the information is first sent to another module (for example, a radio frequency module or an antenna) in the terminal, and then sent to the base station by the module.

When the communication apparatus is a chip used in a base station, the chip in the base station implements the function of the network apparatus in the foregoing method embodiment. That the chip in the base station receives information from a terminal may be understood as that the information is first received by another module (for example, a radio frequency module or an antenna) in the base station, and then sent by the module to the chip in the base station. That the chip in the base station sends information to a terminal may be understood as that the information is first sent to another module (for example, a radio frequency module or an antenna) in the base station, and then sent to the terminal by the module.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

For related content of the processor and the storage in embodiments of this application, refer to the foregoing descriptions. Details are not described again.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/Or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, or C" may indicate: including A; including B; including C; including A and B; including A and C; including B and C; and including A, B, and C.

It may be understood that various numbers (for example, numeral numbers "first" and "second" and letter numbers "A1" and "B1") in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, wherein the method is applicable to a terminal apparatus, and comprises:

   receiving a first common signal, wherein
   the first common signal occupies a frequency domain resource, the first common signal is one of a plurality of first common signals sent by a network apparatus, the plurality of first common signals occupy M frequency domain resources, M is an integer greater than 1, and the frequency domain resource occupied by the first common signal is one of the M frequency domain resources; and
   the plurality of first common signals are common signals of a same serving cell, and the plurality of first common signals are common signals within one common signal transmission period.

2. The method according to claim 1, wherein a spacing between two frequency domain resources among the M frequency domain resources is a first frequency value or a first resource block quantity.

3. The method according to claim 2, wherein the first frequency value comprises $F \times 1200$ kHz, $F \times 1.44$ MHz, $F \times 2.88$ MHz, $F \times 4.32$ MHz, $F \times 5.76$ MHz, $F \times 8.64$ MHz, $F \times 11.52$ MHz, $F \times 17.28$ MHz, $F \times 28.28$ MHz, $F \times 34.56$ MHz, $F \times 69.12$ MHz, or $F \times 138.24$ MHz, wherein F is a positive integer; or
   the first resource block quantity comprises $F \times 12$, wherein F is a positive integer.

4. The method according to any one of claims 1 to 3, wherein the first common signal occupies a time domain resource, the plurality of first common signals occupy N frequency domain resources, N is a positive integer, and the time domain resource occupied by the first common signal is one of the N time domain resources.

5. The method according to claim 4, wherein M is associated with a carrier frequency and/or N is associated with a carrier frequency; or
   a set of M and N values is associated with a carrier frequency.

6. The method according to claim 4 or 5, wherein M is a preset value and/or N is a preset value; or M is determined based on at least one of the following and/or N is determined based on at least one of the following:

   a primary synchronization signal PSS sequence in the first common signal;
   a secondary synchronization signal SSS sequence in the first common signal;
   cell identity information associated with the first common signal;
   a demodulation reference signal DMRS sequence in a physical broadcast channel PBCH of the first common signal;
   received information indicating M; or
   received information indicating N.

7. The method according to any one of claims 4 to 6, wherein the first common signal among the plurality of first common signals corresponds to a time-frequency index; and

the time-frequency index satisfies one of the following:

the time-frequency index indicates an order of a time-frequency resource of the first common signal among a plurality of time-frequency resources occupied by the plurality of first common signals, wherein the plurality of time-frequency resources comprise the M frequency domain resources and the N time domain resources, and the plurality of time-frequency resources are ordered in a time-first-then-frequency manner, or the plurality of time-frequency resources are ordered in a frequency-first-then-time manner; or

the time-frequency index comprises a first value and a second value, the first value indicates an order of the time domain resource of the first common signal among the N time domain resources, and the second value indicates an order of the frequency domain resource of the first common signal among the M frequency domain resources.

8. The method according to any one of claims 1 to 7, wherein the method further comprises:
receiving, based on the first common signal, a second common signal or a control channel corresponding to the second common signal, wherein the second common signal comprises system information.

9. The method according to claim 8, wherein the frequency domain resource of the first common signal and a frequency domain resource of the second common signal satisfy one of the following:

a start frequency of the frequency domain resource of the first common signal is the same as a start frequency of the frequency domain resource of the second common signal;

a center frequency of the frequency domain resource of the first common signal is the same as a center frequency of the frequency domain resource of the second common signal;

a frequency of the frequency domain resource of the first common signal and a frequency of the frequency domain resource of the second common signal are spaced by a second value, wherein the second value is a preset value;

a frequency of the frequency domain resource of the first common signal and a frequency of the frequency domain resource of the second common signal are spaced by a third value, wherein the third value is associated with a bandwidth of the second common signal;

a frequency of the frequency domain resource of the first common signal and a frequency of the frequency domain resource of the second common signal are spaced by a fourth value, wherein the fourth value is associated with a difference between a bandwidth of the second common signal and a bandwidth of the first common signal; or

a frequency offset between the frequency domain resource of the first common signal and a frequency domain resource of another first common signal is associated with a frequency offset between the frequency domain resource of the first common signal and the frequency domain resource of the second common signal.

10. The method according to claim 8 or 9, wherein the time domain resource of the first common signal is the same as a time domain resource of the second common signal; or
a time domain resource of the second common signal is associated with at least one of the time domain resource of the first common signal, a subcarrier spacing of the first common signal, a value of M, or the time-frequency index of the first common signal.

11. The method according to claim 10, wherein a time domain resource position $n_0$ of the second resource satisfies the following formula:

$$n_0 = \left( O \cdot 2^\mu + \lfloor \lfloor i/M \rfloor \cdot X \rfloor \right),$$

wherein
$\mu$ is the subcarrier spacing of the first common signal, $O$ is a value indicated by master system information or a preset value, $X$ is a value indicated by the master system information or a preset value, $i$ is the time-frequency index of the first common signal, and $\lfloor \cdot \rfloor$ represents rounding down.

12. The method according to any one of claims 1 to 11, wherein two first common signals among the plurality of first common signals satisfy at least one of the following: the two first common signals correspond to different radio frequency channels, different antenna ports, or different spatial relations; or
the plurality of first common signals satisfy at least one of the following: the plurality of first common signals correspond to a first radio frequency channel, a first antenna port, or a first spatial relation, wherein a signal transmitted through the first radio frequency channel is a common signal, a signal transmitted on the first antenna port is a common signal, and a signal associated with the first spatial relation is a common signal.

13. A communication method, wherein the method is applicable to a network apparatus, and comprises:

sending a plurality of first common signals, wherein
the plurality of first common signals occupy M frequency domain resources, M is an integer greater than 1, and a first common signal among the plurality of first common signals occupies one of the M frequency domain resources; and
the plurality of first common signals are common signals of a same serving cell, and the plurality of first common signals are common signals within one common signal transmission period.

14. The method according to claim 13, wherein a spacing between two frequency domain resources among the M frequency domain resources is a first frequency value or a first resource block quantity.

15. The method according to claim 14, wherein the first frequency value comprises $F \times 1200$ kHz, $F \times 1.44$ MHz, $F \times 2.88$ MHz, $F \times 4.32$ MHz, $F \times 5.76$ MHz, $F \times 8.64$ MHz, $F \times 11.52$ MHz, $F \times 17.28$ MHz, $F \times 28.28$ MHz, $F \times 34.56$ MHz, $F \times 69.12$ MHz, or $F \times 138.24$ MHz, wherein F is a positive integer; or
the first resource block quantity comprises $F \times 12$, wherein F is a positive integer.

16. The method according to any one of claims 13 to 15, wherein the first common signal occupies a time domain resource, the plurality of first common signals occupy N frequency domain resources, N is a positive integer, and the time domain resource occupied by the first common signal is one of the N time domain resources.

17. The method according to claim 16, wherein M is associated with a carrier frequency and/or N is associated with a carrier frequency; or
a set of M and N values is associated with a carrier frequency.

18. The method according to claim 16 or 17, wherein M is a preset value and/or N is a preset value; or M is determined based on at least one of the following and/or N is determined based on at least one of the following:

a primary synchronization signal PSS sequence in the first common signal among the plurality of first common signals;
a secondary synchronization signal SSS sequence in the first common signal among the plurality of first common signals;
cell identity information associated with the first common signal among the plurality of first common signals;
a demodulation reference signal DMRS sequence in a physical broadcast channel PBCH of the first common signal among the plurality of first common signals;
received information indicating M; or
received information indicating N.

19. The method according to any one of claims 16 to 18, wherein the first common signal among the plurality of first common signals corresponds to a time-frequency index; and
the time-frequency index satisfies one of the following:

the time-frequency index indicates an order of a time-frequency resource of the first common signal among a plurality of time-frequency resources occupied by the plurality of first common signals, wherein the plurality of time-frequency resources comprise the M frequency domain resources and the N time domain resources, and the plurality of time-frequency resources are ordered in a time-first-then-frequency manner, or the plurality of time-frequency resources are ordered in a frequency-first-then-time manner; or
the time-frequency index comprises a first value and a second value, the first value indicates an order of the time domain resource of the first common signal among the N time domain resources, and the second value indicates an order of the frequency domain resource of the first common signal among the M frequency domain resources.

20. The method according to any one of claims 16 to 19, wherein the method further comprises:
sending a second common signal or a control channel corresponding to the second common signal, wherein the second common signal comprises system information.

21. The method according to claim 20, wherein the frequency domain resource of the first common signal and a frequency domain resource of the second common signal satisfy one of the following:

a start frequency of the frequency domain resource of the first common signal is the same as a start frequency of the frequency domain resource of the second common signal;

a center frequency of the frequency domain resource of the first common signal is the same as a center frequency of the frequency domain resource of the second common signal;

a frequency of the frequency domain resource of the first common signal and a frequency of the frequency domain resource of the second common signal are spaced by a second value, wherein the second value is a preset value;

a frequency of the frequency domain resource of the first common signal and a frequency of the frequency domain resource of the second common signal are spaced by a third value, wherein the third value is associated with a bandwidth of the second common signal;

a frequency of the frequency domain resource of the first common signal and a frequency of the frequency domain resource of the second common signal are spaced by a fourth value, wherein the fourth value is associated with a difference between a bandwidth of the second common signal and a bandwidth of the first common signal; or

a frequency offset between the frequency domain resource of the first common signal and a frequency domain resource of another first common signal is associated with a frequency offset between the frequency domain resource of the first common signal and the frequency domain resource of the second common signal.

22. The method according to claim 20 or 21, wherein the time domain resource of the first common signal is the same as a time domain resource of the second common signal; or
a time domain resource of the second common signal is associated with at least one of the time domain resource of the first common signal, a subcarrier spacing of the first common signal, a value of M, or the time-frequency index of the first common signal.

23. The method according to claim 22, wherein a time domain resource position $n_0$ of the second resource satisfies the following formula:

$$n_0 = \left( O \cdot 2^\mu + \left\lfloor \lfloor i/M \rfloor \cdot X \right\rfloor \right),$$

wherein
$\mu$ is the subcarrier spacing of the first common signal, $O$ is a value indicated by master system information or a preset value, $X$ is a value indicated by the master system information or a preset value, $i$ is the time-frequency index of the first common signal, and $\lfloor \cdot \rfloor$ represents rounding down.

24. The method according to any one of claims 13 to 23, wherein two first common signals among the plurality of first common signals satisfy at least one of the following: the two first common signals correspond to different radio frequency channels, different antenna ports, or different spatial relations; or
the plurality of first common signals satisfy at least one of the following: the plurality of first common signals correspond to a first radio frequency channel, a first antenna port, or a first spatial relation, wherein a signal transmitted through the first radio frequency channel is a common signal, a signal transmitted on the first antenna port is a common signal, and a signal associated with the first spatial relation is a common signal.

25. A communication apparatus, comprising a module configured to perform the method according to any one of claims 1 to 12 or a module configured to perform the method according to any one of claims 13 to 24.

26. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 12 or the method according to any one of claims 13 to 24 by using a logic circuit or by executing code instructions.

27. A communication apparatus, comprising a processor, wherein the processor is configured to implement the method according to any one of claims 1 to 12 or the method according to any one of claims 13 to 24 by using a logic circuit or by executing code instructions.

28. A computer-readable storage medium, wherein the storage medium stores a computer program or instructions, and when the computer program or the instructions are executed by a communication apparatus, the method according to any one of claims 1 to 12 or the method according to any one of claims 13 to 24 is implemented.

29. A computer program product, wherein the computer program product stores a computer program, the computer program comprises program instructions, and when the program instructions are executed by a computer, the computer is enabled to perform the method according to any one of claims 1 to 12 or the method according to any one of claims 13 to 24.

FIG. 1

EP 4 787 992 A1

Common signal
transmission period

Common signal
transmission period

Common signal
transmission period

Time
window

Time
window

Time
window

FIG. 2

System
frame
number
(SFN)

Slot

Downlink

Uplink

SSB

30 kHz

Symbol

Slots

SSB0    SSB1    SSB2    SSB3    SSB4    SSB5    SSB6    SSB7

FIG. 3

| Terminal apparatus | | Network apparatus |

401: A plurality of first common signals

402: Receive a first common signal

403: Second common signal

**FIG. 4**

Frequency domain

SSB#m+1    f_(m+1)

SSB#m    f_m

Time domain

**FIG. 5**

Frequency
domain

| | | | |
|---|---|---|---|
| SSB# (M−1)N | SSB# (M−1)N+1 | ... | SSB# MN−1 |
| ... | ... | ... | ... |
| SSB#N | SSB# 1+N | ... | SSB# 2N−1 |
| SSB#0 | SSB#1 | ... | SSB# N−1 |

M frequency domain resources

t$^{th}$ period of first common signals
(N time domain resources)

(t+1)$^{th}$ period of first common
signals (N time domain resources)

Time domain

FIG. 6

EP 4 787 992 A1

FIG. 7

EP 4 787 992 A1

FIG. 8

FIG. 9

FIG. 10

Module 1204

$F_{SSB}$

Phase
shifter

Element

Signal transceiver unit
1203

$F_{1, 1}$

$F_{1, w}$

Processing
unit 1201

Transmitting
unit 12031

Storage unit
1202

Receiving
unit 12032

Antenna array #0

$F_{R, 1}$

$F_{R, w}$

Antenna array #(R–1)

FIG. 11

FIG. 12

FIG. 13

FIG. 14

## INTERNATIONAL SEARCH REPORT

| International application No. |
|---|
| **PCT/CN2024/122257** |

| A. | CLASSIFICATION OF SUBJECT MATTER |
|---|---|

H04W72/04(2023.01)i

According to International Patent Classification (IPC) or to both national classification and IPC

| B. | FIELDS SEARCHED |
|---|---|

Minimum documentation searched (classification system followed by classification symbols)

    IPC: H04W

Documentation searched other than minimum documentation to the extent that such documents are included in the fields searched

Electronic data base consulted during the international search (name of data base and, where practicable, search terms used)

    CNTXT, ENTXTC, ENTXT, VEN, 3GPP, IEEE: 公共信息, 公共消息, 公共信号, 同步信号, 频分复用, 时分复用, 频率, 频域, 时域, 间隔, common signal?, SSB, FDM, TDM, frequency, frequency domain, time domain, gap, grid?

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114846871 A (HUAWEI TECHNOLOGIES CO., LTD.) 02 August 2022 (2022-08-02) description, paragraphs [0137]-[0313] | 1-8, 13-20, 25-29 |
| X | WO 2022183390 A1 (HUAWEI TECHNOLOGIES CO., LTD.) 09 September 2022 (2022-09-09) description, paragraphs [0098]-[0270] | 1-6, 8, 13-18, 20, 25-29 |
| X | CN 116437471 A (HUAWEI TECHNOLOGIES CO., LTD.) 14 July 2023 (2023-07-14) description, paragraphs [0086]-[0173] | 1-8, 13-20, 25-29 |
| X | CN 116760516 A (HUAWEI TECHNOLOGIES CO., LTD.) 15 September 2023 (2023-09-15) description, paragraphs [0051]-[0129] | 1-6, 8, 13-18, 20, 25-29 |
| X | CN 116437424 A (HUAWEI TECHNOLOGIES CO., LTD.) 14 July 2023 (2023-07-14) description, paragraphs [0111]-[0223] | 1-6, 8, 13-18, 20, 25-29 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 December 2024** | **02 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/122257**

| Patent document cited in search report | | | Publication date (day/month/year) | Patent family member(s) | | | Publication date (day/month/year) |
|---|---|---|---|---|---|---|---|
| CN | 114846871 | A | 02 August 2022 | WO | 2021134693 | A1 | 08 July 2021 |
| | | | | EP | 4072214 | A1 | 12 October 2022 |
| | | | | US | 2022338140 | A1 | 20 October 2022 |
| | | | | EP | 4072214 | A4 | 28 December 2022 |
| WO | 2022183390 | A1 | 09 September 2022 | CN | 116941290 | A | 24 October 2023 |
| | | | | EP | 4294095 | A1 | 20 December 2023 |
| | | | | US | 2023413240 | A1 | 21 December 2023 |
| | | | | EP | 4294095 | A4 | 10 April 2024 |
| CN | 116437471 | A | 14 July 2023 | WO | 2023125222 | A1 | 06 July 2023 |
| CN | 116760516 | A | 15 September 2023 | WO | 2023165548 | A1 | 07 September 2023 |
| CN | 116437424 | A | 14 July 2023 | WO | 2023125091 | A1 | 06 July 2023 |
| | | | | EP | 4443985 | A1 | 09 October 2024 |
| | | | | US | 2024357571 | A1 | 24 October 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311349189